(19) 

Europäisches
Patentamt
European
Patent Office
Office européen
des brevets

(11) **EP 3 836 042 A1**

(12) **EUROPEAN PATENT APPLICATION**
published in accordance with Art. 153(4) EPC

(43) Date of publication:
**16.06.2021 Bulletin 2021/24**

(21) Application number: **19845981.0**

(22) Date of filing: **31.07.2019**

(51) Int Cl.:
*G06Q 10/00* (2012.01)

(86) International application number:
**PCT/JP2019/030000**

(87) International publication number:
**WO 2020/031805 (13.02.2020 Gazette 2020/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **07.08.2018 JP 2018148608**

(71) Applicant: **Nippon Steel Texeng. Co., Ltd.
Tokyo, 100-0005 (JP)**

(72) Inventors:
• **SHIMOI, Shinichirou**
**Tokyo 100-0005 (JP)**
• **KUNINAGA, Manabu**
**Tokyo 100-0005 (JP)**

(74) Representative: **Vossius & Partner
Patentanwälte Rechtsanwälte mbB
Siebertstrasse 3
81675 München (DE)**

(54) **MAINTENANCE MANAGEMENT DEVICE, MAINTENANCE MANAGEMENT METHOD, AND PROGRAM**

(57) The present invention includes: a condition information acquisition unit (131) that acquires, for each facility (201) in a facility group (200), a plurality of pieces of condition information that indicate a condition of the corresponding facility (201); a current failure risk calculation unit (132) that calculates, for each of the facilities (201), a current facility failure risk by using a plurality of pieces of the condition information; a future failure risk estimation unit (133) that estimates, for each of the facilities (201), a future facility failure risk by using the current facility failure risk; a maintenance merit calculation unit (136) that calculates, for each of the facilities (201), a maintenance merit based on a reduction amount of a facility stop prediction time based on the future facility failure risk and based on a maintenance prediction time based on the future facility failure risk; and an optimal maintenance timing setting unit (137) that sets an optimal maintenance timing of the facility group (200) based on the maintenance merits in the respective facilities (201).

FIG. 1

EP 3 836 042 A1

**Description**

TECHNICAL FIELD

The present invention relates to a maintenance management device and a maintenance management method that manage maintenance in a facility group consisting of a plurality of facilities, and a program for causing a computer to function as the maintenance management device.

BACKGROUND ART

Conventionally, there has been proposed a technique to set an optimal maintenance timing of a target facility (for example, Patent Literature 1 or Patent Literature 2). Concretely, in Patent Literature 1, there has been proposed a technique to set the optimal maintenance timing on the basis of equipment maintenance information to manage operation records containing a working record, a failure record, and a renewal record for each device (equipment). Further, in Patent Literature 2, there has been proposed a technique to set, based on vibration data of a target facility, the optimal maintenance timing of the facility.

CITATION LIST

PATENT LITERATURE

Patent Literature 1: Japanese Laid-open Patent Publication No. 2005-182465
Patent Literature 2: Japanese Laid-open Patent Publication No. 2009-180722

SUMMARY OF INVENTION

TECHNICAL PROBLEM

However, the technique described in Patent Literature 1 aims at setting the optimal maintenance timing on the basis of the equipment maintenance information to manage the operation records containing the working record, the failure record, and the renewal record, and does not aim at setting the optimal maintenance timing using condition information indicating the real time condition of the device (equipment), for example, and therefore, does not take into account the degradation condition or the like of the equipment that changes over time, and as a result, the technique is inadequate in terms of the optimal maintenance timing in the event of the equipment being operated actually.
Further, the technique described in Patent Literature 2 aims at setting, based on the vibration data of a target facility, the optimal maintenance timing of the facility, namely, aims at setting the optimal maintenance timing using one piece of condition information indicating the condition of the facility, and thus does not take into account the condition of the facility other than the vibration data being one piece of the condition information, and as a result, the technique is inadequate in terms of the optimal maintenance timing in the even of the facility being operated actually.
Further, the techniques described in Patent Literature 1 and Patent Literature 2 originally relate to a technique to set the optimal maintenance timing of a target equipment/facility, and do not take into account setting of the optimal maintenance timing of a facility group consisting of a plurality of facilities.
The present invention has been made in consideration of such problems, and an object thereof is to provide a mechanism capable of setting an optimal maintenance timing of a facility group consisting of a plurality of facilities with high accuracy.

SOLUTION TO PROBLEM

The maintenance management device of the present invention is a maintenance management device that manages maintenance in a facility group consisting of a plurality of facilities, the maintenance management device including: a condition information acquisition means that acquires, for each facility in the plurality of facilities, a plurality of pieces of condition information that indicate a condition of the corresponding facility; a current failure risk calculation means that calculates, for each of the facilities, a current facility failure risk by using the plurality of pieces of condition information in the corresponding facility; a future failure risk estimation means that estimates, for each of the facilities, a future facility failure risk by using the current facility failure risk in the corresponding facility; a maintenance merit calculation means that calculates, for each of the facilities, a maintenance merit based on a reduction amount of a facility stop prediction time based on the future facility failure risk in the corresponding facility and based on a maintenance prediction time based on the future facility failure risk in the corresponding facility; and an optimal maintenance timing setting means that sets an optimal maintenance timing relating to the maintenance for the facility group based on the maintenance merits in the respective facilities.

Further, the present invention includes a maintenance management method by the above-described maintenance management device and a program causing a computer to function as respective means of the above-described maintenance management device.

ADVANTAGEOUS EFFECTS OF INVENTION

According to the present invention, it is possible to set the optimal maintenance timing of a facility group consisting of a plurality of facilities with high accuracy.

BRIEF DESCRIPTION OF DRAWINGS

[Fig. 1] Fig. 1 is a diagram illustrating one example of a schematic configuration of a maintenance management system including a maintenance management device according to an embodiment of the present invention.

[Fig. 2] Fig. 2 is a flowchart illustrating one example of a processing procedure of a maintenance management method by the maintenance management device according to the embodiment of the present invention.

[Fig. 3A] Fig. 3A is a view illustrating one example of a condition information diagnosis table in the embodiment of the present invention.

[Fig. 3B] Fig. 3B is a view illustrating one example of the condition information diagnosis table in the embodiment of the present invention.

[Fig. 3C] Fig. 3C is a view illustrating one example of the condition information diagnosis table in the embodiment of the present invention.

[Fig. 3D] Fig. 3D is a view illustrating one example of the condition information diagnosis table in the embodiment of the present invention.

[Fig. 3E] Fig. 3E is a view illustrating one example of the condition information diagnosis table in the embodiment of the present invention.

[Fig. 4A] Fig. 4A is a view illustrating one example of a current failure risk evaluation table in the embodiment of the present invention.

[Fig. 4B] Fig. 4B is a view illustrating one example of the current failure risk evaluation table in the embodiment of the present invention.

[Fig. 4C] Fig. 4C is a view illustrating one example of the current failure risk evaluation table in the embodiment of the present invention.

[Fig. 4D] Fig. 4D is a view illustrating one example of the current failure risk evaluation table in the embodiment of the present invention.

[Fig. 4E] Fig. 4E is a view illustrating one example of the current failure risk evaluation table in the embodiment of the present invention.

[Fig. 5] Fig. 5 is a view illustrating one example of a facility failure risk estimation table in the embodiment of the present invention.

[Fig. 6A] Fig. 6A is a view illustrating one example of a facility stop time table in the embodiment of the present invention.

[Fig. 6B] Fig. 6B is a view illustrating one example of a risk reduction coefficient table in the embodiment of the present invention.

[Fig. 6C] Fig. 6C is a view illustrating one example of the risk reduction coefficient table in the embodiment of the present invention.

[Fig. 7A] Fig. 7A is a view illustrating one example of a maintenance base time table in the embodiment of the present invention.

[Fig. 7B] Fig. 7B is a view illustrating one example of a maintenance time coefficient table in the embodiment of the present invention.

[Fig. 7C] Fig. 7C is a view illustrating one example of the maintenance time coefficient table in the embodiment of the present invention.

[Fig. 8A] Fig. 8A is a view illustrating one example of the condition information diagnosis table illustrated in Fig. 1, which illustrates an example 1 in the embodiment of the present invention.

[Fig. 8B] Fig. 8B is a view illustrating one example of the condition information diagnosis table illustrated in Fig. 1, which illustrates the example 1 in the embodiment of the present invention.

[Fig. 8C] Fig. 8C is a view illustrating one example of the condition information diagnosis table illustrated in Fig. 1, which illustrates the example 1 in the embodiment of the present invention.

[Fig. 9A] Fig. 9A is a view illustrating one example of the current failure risk evaluation table illustrated in Fig. 1, which illustrates the example 1 in the embodiment of the present invention.

[Fig. 9B] Fig. 9B is a view illustrating one example of the current failure risk evaluation table illustrated in Fig. 1, which illustrates the example 1 in the embodiment of the present invention.

[Fig. 9C] Fig. 9C is a view illustrating one example of the current failure risk evaluation table illustrated in Fig. 1, which illustrates the example 1 in the embodiment of the present invention.

[Fig. 9D] Fig. 9D is a view illustrating one example of a current facility failure risk evaluation result calculated by a current failure risk calculation unit illustrated in Fig. 1, which illustrates the example 1 in the embodiment of the present invention.

[Fig. 9E] Fig. 9E is a view illustrating one example of the current facility failure risk evaluation result calculated by the current failure risk calculation unit illustrated in Fig. 1, which illustrates the example 1 in the embodiment of the present invention.

[Fig. 10A] Fig. 10A is a view illustrating a concrete processing example up to calculation processing of a maintenance merit in a facility K, which illustrates the example 1 in the embodiment of the present invention.

[Fig. 10B] Fig. 10B is a view illustrating a concrete processing example up to the calculation processing of the maintenance merit in the facility K, which illustrates the example 1 in the embodiment of the present invention.

[Fig. 10C] Fig. 10C is a view illustrating a concrete processing example up to the calculation processing of the maintenance merit in the facility K, which illustrates the example 1 in the embodiment of the present invention.

[Fig. 10D] Fig. 10D is a view illustrating a concrete processing example up to the calculation processing of the maintenance merit in the facility K, which illustrates the example 1 in the embodiment of the present invention.

[Fig. 11A] Fig. 11A is a view illustrating a concrete processing example up to calculation processing of a maintenance merit in a facility N, which illustrates the example 1 in the embodiment of the present invention.

[Fig. 11B] Fig. 11B is a view illustrating a concrete processing example up to the calculation processing of the maintenance merit in the facility N, which illustrates the example 1 in the embodiment of the present invention.

[Fig. 11C] Fig. 11C is a view illustrating a concrete processing example up to the calculation processing of the maintenance merit in the facility N, which illustrates the example 1 in the embodiment of the present invention.

[Fig. 11D] Fig. 11D is a view illustrating a concrete processing example up to the calculation processing of the maintenance merit in the facility N, which illustrates the example 1 in the embodiment of the present invention.

[Fig. 12] Fig. 12 is a view illustrating a calculation result of a comprehensive maintenance merit $TLT_t$ relating to a facility group, which illustrates the example 1 in the embodiment of the present invention.

[Fig. 13A] Fig. 13A is a view illustrating a concrete processing example up to calculation processing of a maintenance merit in a facility S, which illustrates an example 2 in the embodiment of the present invention.

[Fig. 13B] Fig. 13B is a view illustrating a concrete processing example up to the calculation processing of the maintenance merit in the facility S, which illustrates the example 2 in the embodiment of the present invention.

[Fig. 13C] Fig. 13C is a view illustrating a concrete processing example up to the calculation processing of the maintenance merit in the facility S, which illustrates the example 2 in the embodiment of the present invention.

[Fig. 13D] Fig. 13D is a view illustrating a concrete processing example up to the calculation processing of the maintenance merit in the facility S, which illustrates the example 2 in the embodiment of the present invention.

[Fig. 14A] Fig. 14A is a view illustrating a concrete processing example up to calculation processing of a maintenance merit in a facility T, which illustrates the example 2 in the embodiment of the present invention.

[Fig. 14B] Fig. 14B is a view illustrating a concrete processing example up to the calculation processing of the maintenance merit in the facility T, which illustrates the example 2 in the embodiment of the present invention.

[Fig. 14C] Fig. 14C is a view illustrating a concrete processing example up to the calculation processing of the maintenance merit in the facility T, which illustrates the example 2 in the embodiment of the present invention.

[Fig. 14D] Fig. 14D is a view illustrating a concrete processing example up to the calculation processing of the maintenance merit in the facility T, which illustrates the example 2 in the embodiment of the present invention.

DESCRIPTION OF EMBODIMENTS

Hereinafter, there will be explained a form for implementing the present invention (an embodiment) with reference to the drawings.

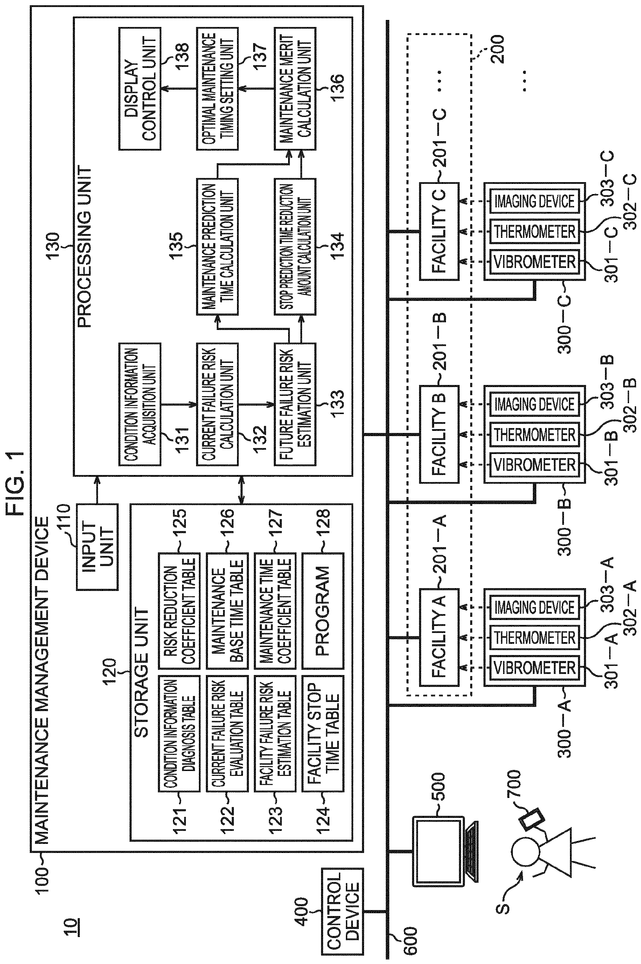

Fig. 1 is a diagram illustrating one example of a schematic configuration of a maintenance management system 10 including a maintenance management device 100 according to the embodiment of the present invention. The maintenance management system 10 is, as illustrated in Fig. 1, configured to include the maintenance management device 100, a facility group 200, measurement devices 300, a control device 400, a display device 500, a network 600, and a portable terminal device 700.

The maintenance management device 100 is a device to manage maintenance in the facility group 200 consisting of a plurality of facilities 201. An internal configuration of the maintenance management device 100 will be described later.

The facility group 200 is a group of the facilities 201 consisting of a plurality of facilities 201, and in the example illustrated in Fig. 1, as a plurality of facilities 201, a facility A (201-A), a facility B (201-B), a facility C (201-C), . . . are illustrated. Incidentally, in the following explanation, when making explanation in a representative manner without identifying each of the facility A (201-A), the facility B (201-B), and the facility C (201-C), the facility is described as the facility 201 as necessary. Further, for example, to each facility of a plurality of facilities 201, a production facility that performs steps for producing a certain product can be applied, and in this example, to the facility group 200, a production line for producing that certain product can be applied.

The measurement devices 300 are arranged to correspond to each facility of a plurality of facilities 201, and each are a device to measure a plurality of pieces of condition information indicating a condition of the corresponding facility 201. In the example illustrated in Fig. 1, a measurement device 300-A that measures a plurality of pieces of condition information that indicate the condition of the facility A (201-A), a measurement device 300-B that measures a plurality of pieces of condition information that indicate the condition of the facility B (201-B), a measurement device 300-C that measures a plurality of pieces of condition information that indicate the condition of the facility C (201-C), . . . are illustrated. Incidentally, in the following explanation, when making explanation in a representative manner without identifying each of the measurement device 300-A, the measurement device 300-B, and the measurement device 300-C, the measurement device is described as the measurement device 300 as necessary.

Further, as illustrated in Fig. 1, a plurality of measurement devices 300 arranged to correspond to a plurality of facilities 201 each are configured to include a vibrometer 301 that measures a vibration condition of the corresponding facility 201, a thermometer 302 that measures a temperature condition of the corresponding facility 201, and an imaging device 303 that measures an external appearance condition of the corresponding facility 201. That is, the measurement device 300-A is configured to include a vibrometer 301-A, a thermometer 302-A, and an imaging device 303-A, the measurement device 300-B is configured to include a vibrometer 301-B, a thermometer 302-B, and an imaging device 303-B, and the measurement device 300-C is configured to include a vibrometer 301-C, a thermometer 302-C, and an imaging device 303-C. Incidentally, in the following explanation, when making explanation in a representative manner without identifying each of the vibrometers 301-A to 301-C, each of the thermometers 302-A to 302-C, and each of the imaging devices 303-A to 303-C, the vibrometer, the thermometer, and the imaging device are described as the vibrometer 301, the thermometer 302, and the imaging device 303 respectively as necessary.

Incidentally, in this embodiment, the measurement device 300 is arranged to correspond to each facility in a plurality of facilities 201, but the present invention is not limited to this form. For example, it is also possible to apply, to the present invention, a form in which the measurement device 300 is not provided to correspond to the facility 201, but is used as the portable terminal device 700 carried by a worker S who monitors the facility group 200.

The control device 400 controls the operation of the maintenance management system 10 in an integrated manner. For example, the control device 400 communicates with the respective facilities 201 in the facility group 200 by using various control signals via the network 600.

The display device 500 is a device that displays various pieces of information and various images, and is configured to include an input device as necessary. For example, the display device 500 can be visually recognized by the worker S who monitors the facility group 200.

The network 600 connects the maintenance management device 100, the facility group 200, the measurement devices 300, the control device 400, and the display device 500 to be able to communicate with one another.

The portable terminal device 700 is a terminal device carried by the worker S, and is used in the case or the like where the worker S patrols to monitor each of the facilities 201 in the facility group 200 and inputs inspected items, and so on, for example. Incidentally, as described above, the portable terminal device 700 may be used as the measurement device 300. Further, the portable terminal device 700 is configured to enable wireless (or wired) communication connection to the network 600, for example.

Next, the internal configuration of the maintenance management device 100 illustrated in Fig. 1 is explained.

The maintenance management device 100 is, as illustrated in Fig. 1, configured to include an input unit 110, a storage unit 120, and a processing unit 130.

The input unit 110 inputs various pieces of information, and so on to the processing unit 130.

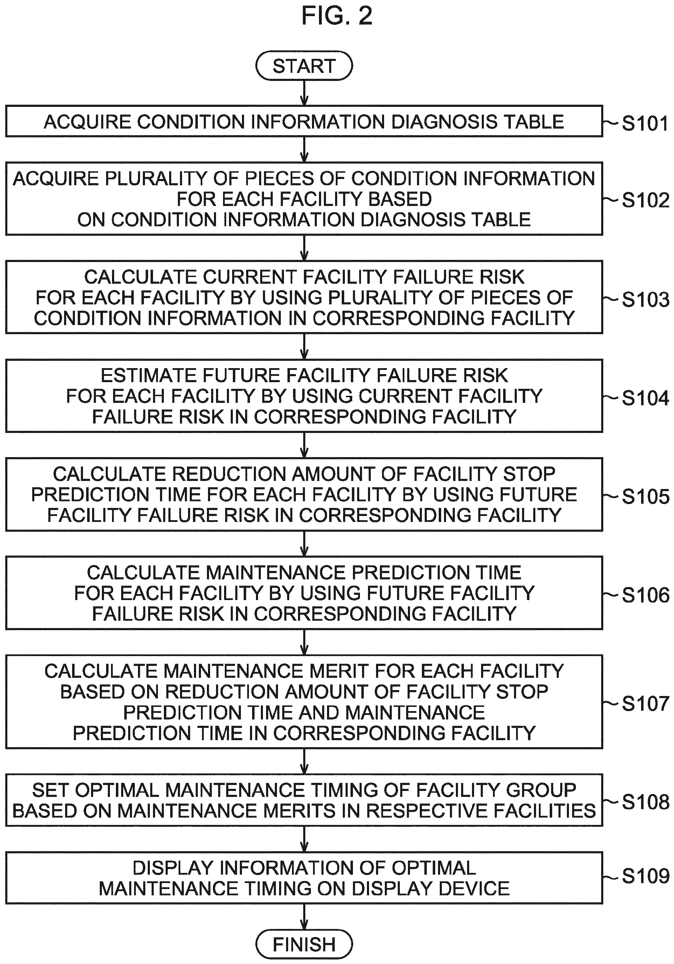

The storage unit 120 stores pieces of information of various tables 121 to 127 and a program 128 necessary for processing in the processing unit 130, and at the same time, stores various pieces of information obtained by processing in the processing unit 130. Concretely, in the storage unit 120, as pieces of the information of the various tables, pieces of information of a condition information diagnosis table 121, a current failure risk evaluation table 122, a facility failure risk estimation table 123, a facility stop time table 124, a risk reduction coefficient table 125, a maintenance base time table 126, and a maintenance time coefficient table 127 are stored as illustrated in Fig. 1. Details of these various tables 121 to 127 will be described later while using the drawings in and after Fig. 2. Further, the program 128 is a program to be used when the processing unit 130 executes various pieces of processing according to the embodiment of the present invention.

The processing unit 130 performs various pieces of processing. Concretely, the processing unit 130 is, as illustrated in Fig. 1, configured to include a condition information acquisition unit 131, a current failure risk calculation unit 132, a future failure risk estimation unit 133, a stop prediction time reduction amount calculation unit 134, a maintenance prediction time calculation unit 135, a maintenance merit calculation unit 136, an optimal maintenance timing setting unit 137, and a display control unit 138. In more detail, the processing unit 130 executes the program 128 stored in the storage unit 120, and thereby, the functions of the respective component units 131 to 138 are achieved. Details of these component units 131 to 138 will be described later while using the drawings in and after Fig. 2.

Fig. 2 is a flowchart illustrating one example of a processing procedure of a maintenance management method by the maintenance management device 100 according to the embodiment of the present invention.

First, when the input unit 110 inputs execution instruction information of maintenance management to be performed by the maintenance management device 100, at Step S101 in Fig. 2, the condition information acquisition unit 131 performs processing to acquire information of the condition information diagnosis table 121 from the storage unit 120. Details of the condition information diagnosis table 121 will be explained below.

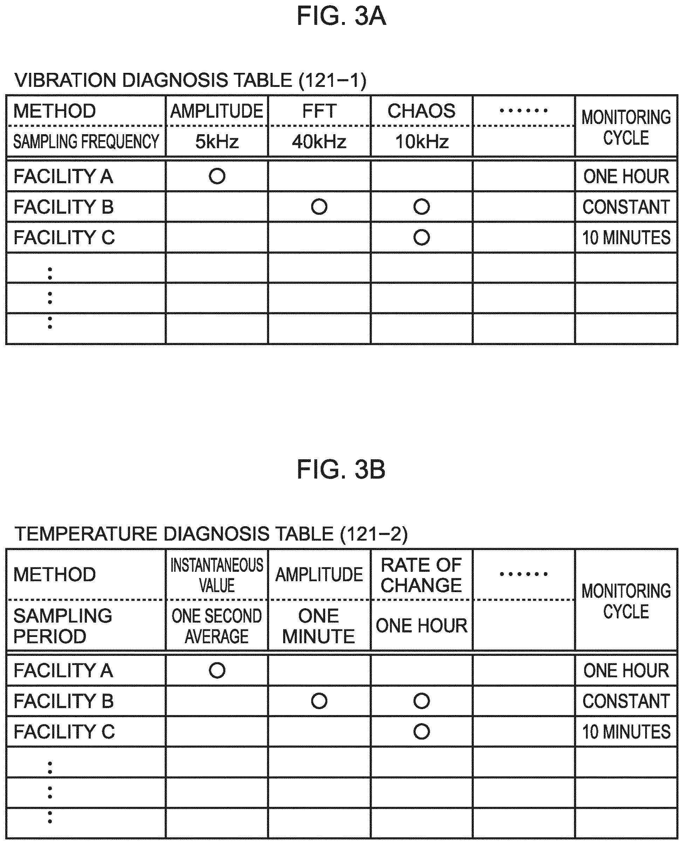

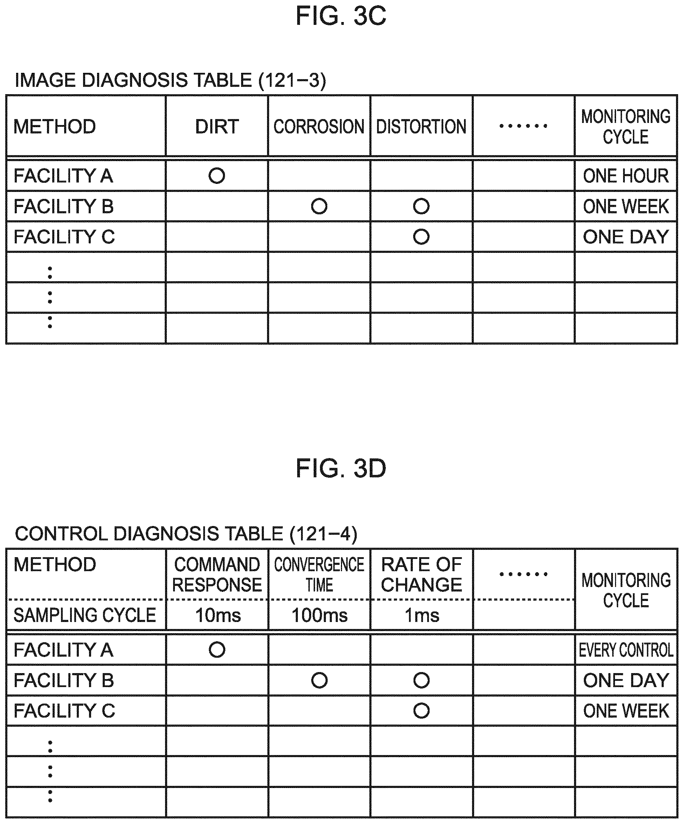

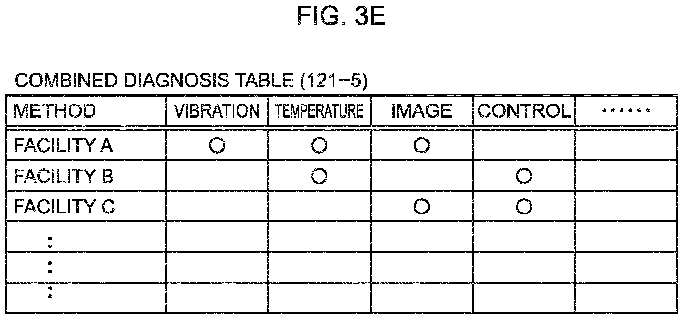

Fig. 3A to Fig. 3E are views illustrating one example of the condition information diagnosis table 121 in the embodiment of the present invention. In the example illustrated in Fig. 3A to Fig. 3E, the condition information diagnosis table 121 is composed of a vibration diagnosis table 121-1 illustrated in Fig. 3A, a temperature diagnosis table 121-2 illustrated in Fig. 3B, an image diagnosis table 121-3 illustrated in Fig. 3C, a control diagnosis table 121-4 illustrated in Fig. 3D, and a combined diagnosis table 121-5 illustrated in Fig. 3E.

The vibration diagnosis table 121-1 illustrated in Fig. 3A is a table illustrating, for each facility 201, items of vibration (amplitude, FFT, chaos, . . .) to be measured by the corresponding vibrometer 301 and its monitoring cycle.

The temperature diagnosis table 121-2 illustrated in Fig. 3B is a table illustrating, for each facility 201, items of temperature (instantaneous value, amplitude, rate of change, . . .) to be measured by the corresponding thermometer 302 and its monitoring cycle. Here, the rate of change is to indicate the amount of change in temperature per unit minute when the temperature is monitored for one hour, for example.

The image diagnosis table 121-3 illustrated in Fig. 3C is a table illustrating, for each facility 201, items of external appearance (dirt, corrosion, distortion, . . .) to be measured by the corresponding imaging device 303 and its monitoring cycle.

The control diagnosis table 121-4 illustrated in Fig. 3D is a table illustrating, for each facility 201, items of response processing (command response, convergence time, rate of change, . . .) in response to the control signals from the control device 400 and its monitoring cycle. Here, the command response indicates a response characteristic responsive to the control signal, for example, the convergence time indicates a period of time until a control target converges to a target value based on the control signal, for example, and the rate of change indicates the degree to which a control target changes toward a target value based on the control signal, for example.

The combined diagnosis table 121-5 illustrated in Fig. 3E is a table illustrating, for each facility 201, a plurality of pieces of condition information (vibration, temperature, image, control, . . .) used to diagnose the condition of the corresponding facility 201 in a combined manner. In the combined diagnosis table 121-5 illustrated in Fig. 3E, "VIBRATION" corresponds to the diagnosis using the vibration diagnosis table 121-1 in Fig. 3A, "TEMPERATURE" corresponds to the diagnosis using the temperature diagnosis table 121-2 in Fig. 3B, "IMAGE" corresponds to the diagnosis using the image diagnosis table 121-3 in Fig. 3C, and "CONTROL" corresponds to the diagnosis using the control diagnosis table 121-4 in Fig. 3D.

Incidentally, in this embodiment, the vibration diagnosis table 121-1, the temperature diagnosis table 121-2, the image diagnosis table 121-3, the control diagnosis table 121-4, and the combined diagnosis table 121-5 that are illustrated in Fig. 3A to Fig. 3E can be changed appropriately by a user of the maintenance management device 100, for example, via the input unit 110 or the like as necessary, or can also be changed by the maintenance management device 100, for example, statistically analyzing actual performance data and automatically learning the resultant.

Here, we return to the explanation of Fig. 2 again.

After the processing at Step S101 in Fig. 2 is finished, at Step S102 in Fig. 2, the condition information acquisition unit 131 then acquires, for each of the facilities 201, a plurality of pieces of condition information indicating the condition of the corresponding facility, based on the condition information diagnosis table 121 acquired at Step S101. Here, the condition information acquisition unit 131 acquires, as a plurality of pieces of the condition information, information indicating the condition of vibration from the vibrometer 301, information indicating the condition of temperature from the thermometer 302, image information indicating the condition of external appearance from the imaging device 303, and information indicating the condition of response processing responsive to the control signal from the control device 400.

Concretely, the condition information acquisition unit 131 acquires, of the facility A (201-A), information indicating the condition of vibration (information on the amplitude of vibration with the monitoring cycle set to one hour) determined in the vibration diagnosis table 121-1 illustrated in Fig. 3A, information indicating the condition of temperature (information on the instantaneous value of temperature with the monitoring cycle set to one hour) determined in the temperature diagnosis table 121-2 illustrated in Fig. 3B, and image information (image information on the dirt of external appearance with the monitoring cycle set to one hour) determined in the image diagnosis table 121-3 illustrated in Fig. 3C based on the combined diagnosis table 121-5 illustrated in Fig. 3E. Further, concretely, the condition information acquisition unit 131 acquires, of the facility B (201-B), information indicating the condition of temperature (information on the amplitude of temperature and information on the rate of change of temperature with the constant monitoring cycle (in this embodiment, "constant" is defined as a cycle of one minute or less)) determined in the temperature diagnosis table 121-2 illustrated in Fig. 3B and information indicating the condition of response processing (information on the convergence time and information on the rate of change that relate to control with the monitoring cycle set to one day) determined in the control diagnosis table 121-4 illustrated in Fig. 3D based on the combined diagnosis table 121-5 illustrated in Fig. 3E. Further, concretely, the condition information acquisition unit 131 acquires, of the facility C (201-C), image information (image information on the distortion of external appearance with the monitoring cycle set to one day) determined in the image diagnosis table 121-3 illustrated in Fig. 3C and information indicating the condition of response processing (information on the rate of change relating to control with the monitoring cycle set to one week) determined in the control diagnosis table 121-4 illustrated in Fig. 3D based on the combined diagnosis table 121-5 illustrated in Fig. 3E. Incidentally, in the flowchart illustrated in Fig. 2, there is described the example where the condition information acquisition unit 131 shifts to the following step S103 when completing acquisition of all the pieces of information in the above-described facility A (201-A) to facility C (201-C) based on the monitoring cycles defined in the various diagnosis tables 121-1 to 121-4, but this embodiment is not limited to this form. For example, it is also possible to apply, to this embodiment, a form where the condition information acquisition unit 131 shifts to the following step S103 in the case where the condition information acquisition unit 131, for each facility 201, completes acquisition of all the pieces of information in the corresponding facility 201, and processes Steps S102 to S107 in Fig. 2 in a loop for each facility 201. Further, the management of the monitoring cycle may be in a form where the maintenance management device 100 itself manages the monitoring cycle, or it may be in a form where an external device other than the maintenance management device 100 manages the monitoring cycle and the maintenance management device 100 performs processing based on a trigger from the external device.

Then, in Step S103 in Fig. 2, the current failure risk calculation unit 132 calculate, for each of the facilities 201, a current facility failure risk by using a plurality of pieces of the condition information in the corresponding facility 201 acquired at Step S102. Concretely, in this embodiment, the current failure risk calculation unit 132 calculates, for each of the facilities 201, a current facility failure risk by using information of the current failure risk evaluation table 122 stored in the storage unit 120. Details of the current failure risk evaluation table 122 are explained below.

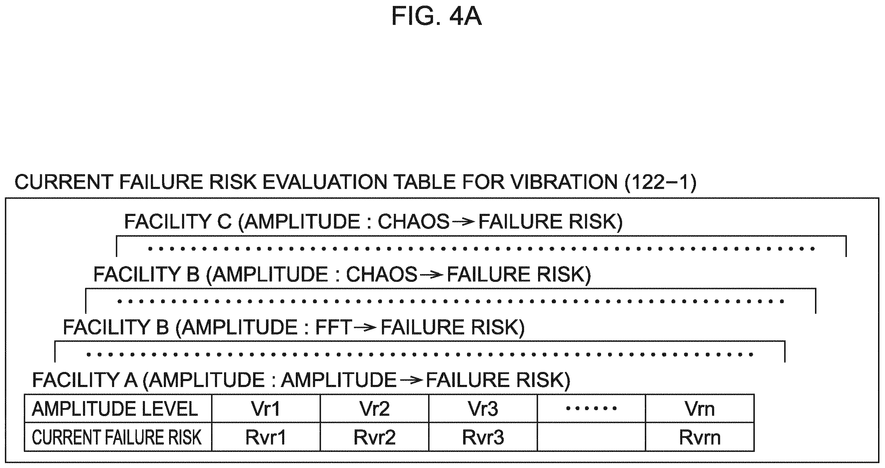

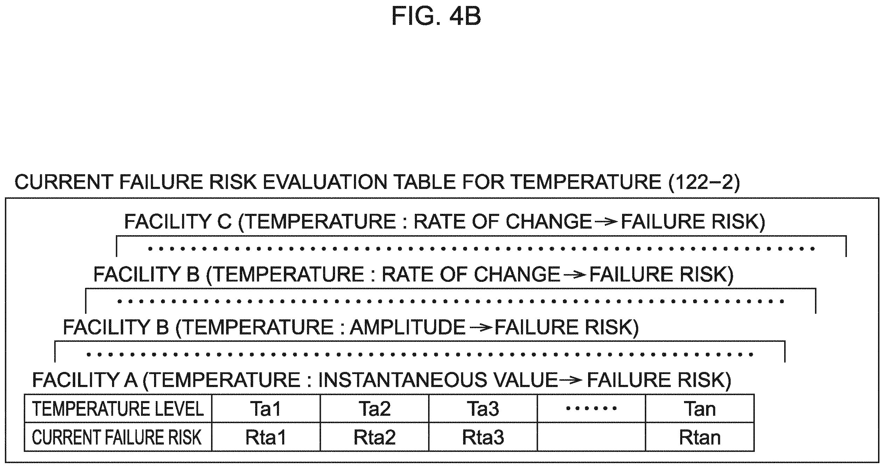

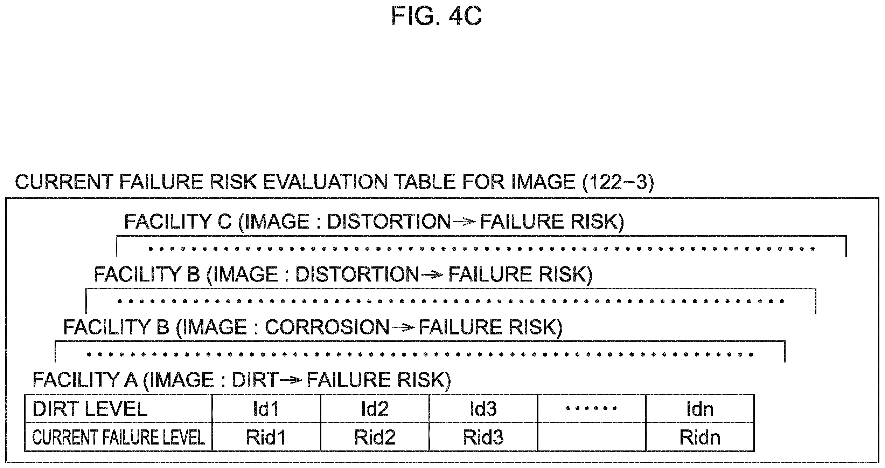

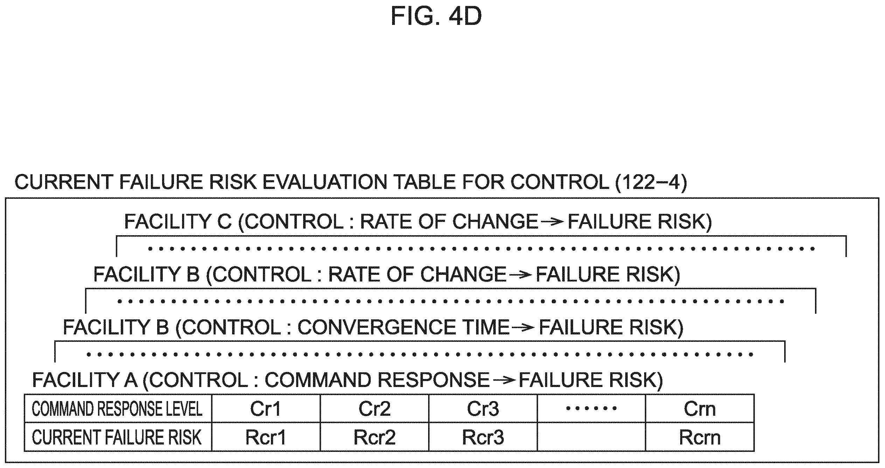

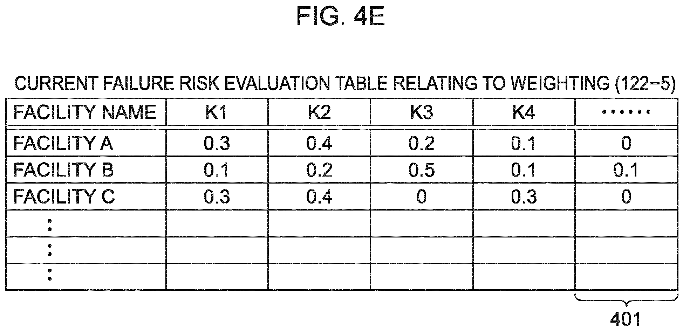

Fig. 4A to Fig. 4E are views illustrating one example of the current failure risk evaluation table 122 in the embodiment of the present invention. In the example illustrated in Fig. 4A to Fig. 4E, the current failure risk evaluation table 122 is composed of a current failure risk evaluation table for vibration 122-1 illustrated in Fig. 4A, a current failure risk evaluation table for temperature 122-2 illustrated in Fig. 4B, a current failure risk evaluation table for image 122-3 illustrated in Fig. 4C, a current failure risk evaluation table for control 122-4 illustrated in Fig. 4D, and a current failure risk evaluation table relating to weighting 122-5 illustrated in Fig. 4E.

The current failure risk evaluation table for vibration 122-1 illustrated in Fig. 4A is a table corresponding to the vibration diagnosis table 121-1 illustrated in Fig. 3A, and is a table illustrating a relationship between a level in the items (amplitude, FFT, chaos, . . .) of vibration and a current failure risk.

The current failure risk evaluation table for temperature 122-2 illustrated in Fig. 4B is a table corresponding to the temperature diagnosis table 121-2 illustrated in Fig. 3B, and is a table illustrating a relationship between a level in the items (instantaneous value, amplitude, rate of change, . . .) of temperature and a current failure risk.

The current failure risk evaluation table for image 122-3 illustrated in Fig. 4C is a table corresponding to the image diagnosis table 121-3 illustrated in Fig. 3C, and is a table illustrating a relationship between a level in the items (dirt, corrosion, distortion, . . .) of external appearance and a current failure risk.

The current failure risk evaluation table for control 122-4 illustrated in Fig. 4D is a table corresponding to the control diagnosis table 121-4 illustrated in Fig. 3D, and is a table illustrating a relationship between a level in the items (command response, convergence time, rate of change, . . .) of response processing in response to the control signal and a current failure risk.

Incidentally, the levels in the respective items in the current failure risk evaluation tables 122-1 to 122-4 illustrated in Fig. 4A to Fig. 4D and values of their current failure risks may be found either by using results of a theoretical analysis or from past actual performance values. Further, in this embodiment, the maximum values of the current failure risks in the current failure risk evaluation tables 122-1 to 122-4 illustrated in Fig. 4A to Fig. 4D are set to 1.0.

The current failure risk evaluation table relating to weighting 122-5 that is illustrated in Fig. 4E is a table illustrating weighting coefficients to be used when the current failure risk calculation unit 132 calculates the current facility failure risk for each of the facilities 201.

In the current failure risk evaluation table relating to weighting 122-5 illustrated in Fig. 4E, the weighting coefficient described in a region 401 is a coefficient taking into account condition information (for example, pressure, or the like) other than a plurality of pieces of the above-described condition information (vibration, temperature, image, control, . . .). Further, in this embodiment, as illustrated in Fig. 4E, the total of the weighting coefficients in each of the facilities 201 is set to be 1.0. Incidentally, in the example illustrated in Fig. 4E, the weighting coefficient described in the region 401 in the facility B (201-B) is set to 0.1, but this may be set to 0, and 0.1 may be assigned to other weighting coefficients K1 to K4.

Incidentally, in this embodiment, the current failure risk evaluation tables 122-1 to 122-5 illustrated in Fig. 4A to Fig. 4E can be changed appropriately by the user of the maintenance management device 100, for example, via the input unit 110 or the like as necessary, or can also be changed by the maintenance management device 100, for example, statistically analyzing actual performance data and automatically learning the resultant.

Then, the current failure risk calculation unit 132 uses pieces of the information of the current failure risk evaluation tables 122 illustrated in Fig. 4A to Fig. 4E and a plurality of pieces of the condition information (vibration, temperature, image, control, . . .) in each of the facilities 201 that are acquired at Step S102 to calculate the current facility failure risk for each of the facilities 201. Concretely, the current failure risk calculation unit 132 calculates the current failure risk for each condition information by using the current failure risk evaluation tables 122-1 to 122-4 relating to a plurality of pieces of the condition information, and calculates the maximum current failure risk out of a plurality of the calculated current failure risks as the current facility failure risk. Further, when calculating the current failure risk for each condition information, the current failure risk calculation unit 132 performs weighting processing for each condition information by using the current failure risk evaluation table relating to weighting 122-5 illustrated in Fig. 4E.

When in the facility A (201-A), the vibration level illustrated in Fig. 4A is Vr3 (= current failure risk: Rvr3), the temperature level illustrated in Fig. 4B is Ta2 (= current failure risk: Rta2), the dirt level of image illustrated in Fig. 4C is Id2 (= current failure risk: Rid2), and the command response level of control illustrated in Fig. Fig. 4D is Cr1 (= current failure risk: Rcr1), for example, a current facility failure risk $R_A$ in the facility A (201-A) can be represented by the following (1) equation.

$$R_A = \max\{(K1*Rvr3),(K2*Rta2), (K3*Rid2),(K4*Rcr1)\} \quad \cdot \cdot \cdot (1)$$

That is, the (1) equation indicates that out of the current failure risks ((K1*Rvr3), (K2*Rta2), (K3*Rid2), (K4*Rcr1)) calculated for each condition information, the maximum current failure risk is calculated as the current facility failure risk $R_A$. Incidentally, in the (1) equation, the example where the command response level of control illustrated in Fig. 4D is Cr1 (= current failure risk: Rcr1) is described, but in the combined diagnosis table 121-5 illustrated in Fig. 3E, a setting is made in which "CONTROL" is excluded from the diagnosis in the facility A (201-A), and thus in this case, "(K4*Rcr1)" in the above-described (1) equation is not considered in practice.

Although the example of the facility A (201-A) has been explained here, current facility failure risks $R_B$ and $R_C$ in the other facility B (201-B) and facility C (201-C) each can also be calculated in the same manner as in the case of the above-described facility A (201-A).

Incidentally, in this embodiment, in the case where a plurality of items are evaluated in terms of a piece of condition information (a case such that, for example, two items of "AMPLITUDE" and "RATE OF CHANGE" are evaluated in terms of "TEMPERATURE" in the facility B) when calculating the current facility failure risk ($R_A$, $R_B$, $R_C$, . . .) for each of the facilities 201, the evaluation result with the highest value of the failure risk out of the evaluation results of the respective items is employed. Further, in this embodiment, in the case where the measured value in the condition information acquired at Step S102 in Fig. 2 is an intermediate value of tick values in the current failure risk evaluation tables 122-1 to 122-4 illustrated in Fig. 4A to Fig. 4D (for example, a value between Vr2 and Vr3 in Fig. 4A), the value of the current failure risk is calculated by interpolation.

Incidentally, although the current failure risk evaluation tables 122 illustrated in Fig. 4A to Fig. 4E illustrate the example of the table specified for each condition information (vibration, temperature, image, control, . . .), this embodiment is not limited to this form, and a form of a table specified for each facility 201, for example, is also applicable to this embodiment.

Here, we return to the explanation of Fig. 2 again.

After the processing at Step S103 in Fig. 2 is finished, at Step S104 in Fig. 2, the future failure risk estimation unit 133 then estimates, for each of the facilities 201, a future facility failure risk by using the current facility failure risk ($R_A$, $R_B$, $R_C$, . . .) in the corresponding facility 201 calculated at Step S103. More concretely, in this embodiment, the future failure risk estimation unit 133 estimates, for each of the facilities 201, a future facility failure risk by using the information of the facility failure risk estimation table 123 stored in the storage unit 120, in addition to the above-described current facility failure risk in the corresponding facility 201. Details of the facility failure risk estimation table 123 will be explained below.

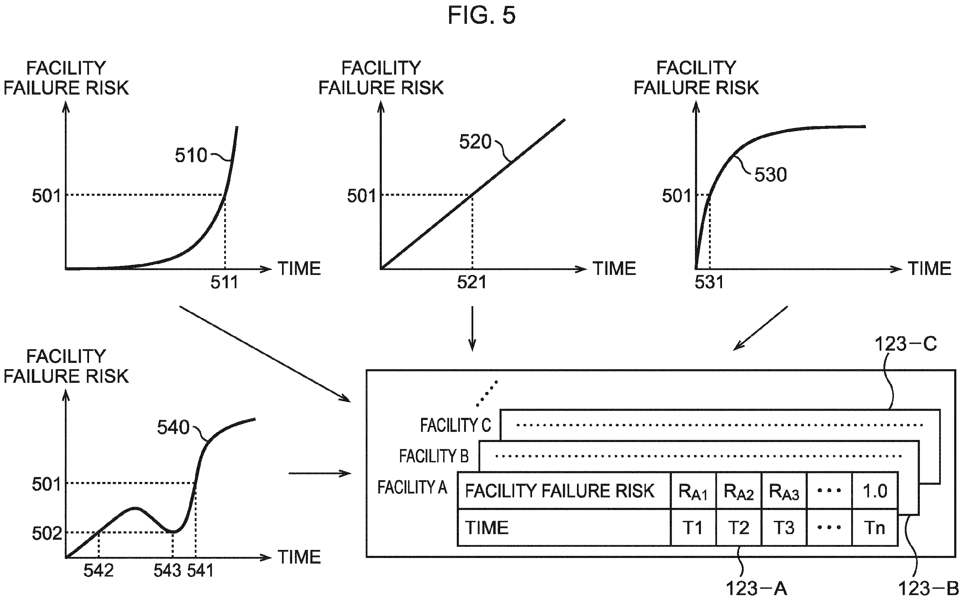

Fig. 5 is a view illustrating one example of the facility failure risk estimation table 123 in the embodiment of the present invention. The facility failure risk estimation table 123 is, as illustrated in Fig. 5, composed of a facility failure risk estimation table 123-A of the facility A (201-A), a facility failure risk estimation table 123-B of the facility B (201-B), and a facility failure risk estimation table 123-C of the facility C (201-C).

In this embodiment, in the facility failure risk estimation tables 123-A to 123-C, one facility failure risk estimation table out of facility failure risk estimation tables 510 to 540 each indicating a relationship between an elapsed time (the horizontal axis) and an assumed facility failure risk (the vertical axis), which are illustrated in Fig. 5, is set. Concretely, the facility failure risk estimation table 510 is a table that assumes the case where the facility failure risk increases rapidly with time. Further, the facility failure risk estimation table 520 is a table that assumes the case where the facility failure risk increases at a constant rate with time. Further, the facility failure risk estimation table 530 is a table that assumes the case where the facility failure risk is less likely to increase after a certain period of time. Further, the facility failure risk estimation table 540 is a table that assumes the case where the direction in which the facility failure risk increases or decreases changes in the middle of the elapsed time.

Incidentally, in this embodiment, the facility failure risk estimation tables 123-A to 123-C illustrated in Fig. 5 can be changed appropriately by the user of the maintenance management device 100, for example, via the input unit 110 or the like as necessary, or can also be changed by the maintenance management device 100, for example, statistically analyzing actual performance data and automatically learning the resultant.

Then, the future failure risk estimation unit 133 first refers to, for each of the facilities 201, the corresponding facility failure risk estimation table 123 to find an elapsed time corresponding to the current facility failure risk ($R_A$, $R_B$, $R_C$, . . .) in the corresponding facility 201 calculated at Step S103 as a current time. Here, for example, in the case where it is assumed that a current facility failure risk 501 illustrated in Fig. 5 is calculated at Step S103 and the facility failure risk estimation table 510 illustrated in Fig. 5 is set as the facility failure risk estimation table 123 in a certain facility 201, the future failure risk estimation unit 133 finds a current time 511. Similarly, in the case where the facility failure risk estimation table 520 illustrated in Fig. 5 is set as the facility failure risk estimation table 123 in a certain facility 201, the future failure risk estimation unit 133 finds a current time 521, and in the case where the facility failure risk estimation table 530 illustrated in Fig. 5 is set, the future failure risk estimation unit 133 finds a current time 531, and in the case where the facility failure risk estimation table 540 illustrated in Fig. 5 is set, the future failure risk estimation unit 133 finds a current time 541. Incidentally, in the case where a current facility failure risk 502 is calculated at Step S103, for example, in the facility failure risk estimation table 540 illustrated in Fig. 5, two current times 542 and 543 are found, but in this case, it is possible to employ a method of identifying the current time, for example, by tracing the passage up to the present time, or the like.

Then, the future failure risk estimation unit 133 estimates, for each of the facilities 201, a facility failure risk due to each elapsed time from the current time in the corresponding facility failure risk estimation table 123 as the future facility failure risk. In the case where the facility failure risk estimation table 510 is set as the facility failure risk estimation table 123, for example, the future failure risk estimation unit 133 estimates a facility failure risk due to each elapsed time from the current time 511 in the facility failure risk estimation table 510 (the facility failure risk on the right side from the current time 511) as the future facility failure risk.

Here, the example of the facility A (201-A) is explained.

In the case of the facility A (201-A), the future failure risk estimation unit 133 refers to the facility failure risk estimation table 123-A by using the current facility failure risk $R_A$ calculated at Step S103, finds n satisfying the following (2) expression, and finds a current time (to be described as "$T_{NOW}$" below) by interpolation calculation.

$$R_{An} \leqq R_A < R_{An+1} \quad \cdot \cdot \cdot (2)$$

Then, the future failure risk estimation unit 133 estimates a facility failure risk due to each elapsed time from the current time $T_{NOW}$ in the facility failure risk estimation table 123-A as a future facility failure risk $R_{At}$ in the facility A (201-A).

Although the example of the facility A (201-A) has been explained here, the same processing as that for the above-described facility A (201-A) is performed also for the facility B (201-B) and the facility C (201-C), and thereby, future facility failure risks $R_{Bt}$ and $R_{Ct}$ are estimated respectively.

Here, we return to the explanation of Fig. 2 again.

After the processing at Step S104 in Fig. 2 is finished, at Step S105 in Fig. 2, the stop prediction time reduction amount calculation unit 134 then calculates, for each of the facilities 201, a reduction amount of a facility stop prediction time by using the future facility failure risk ($R_{At}$, $R_{Bt}$, $R_{Ct}$, . . .) in the corresponding facility 201 estimated at Step S104. More concretely, in this embodiment, the stop prediction time reduction amount calculation unit 134 calculates, for each of the facilities 201, a reduction amount of a facility stop prediction time by using the information of the facility stop time table 124 and the information of the risk reduction coefficient table 125 stored in the storage unit 120, in addition to the above-described future facility failure risk in the corresponding facility 201. Details of the facility stop time table 124 and the risk reduction coefficient table 125 will be explained below.

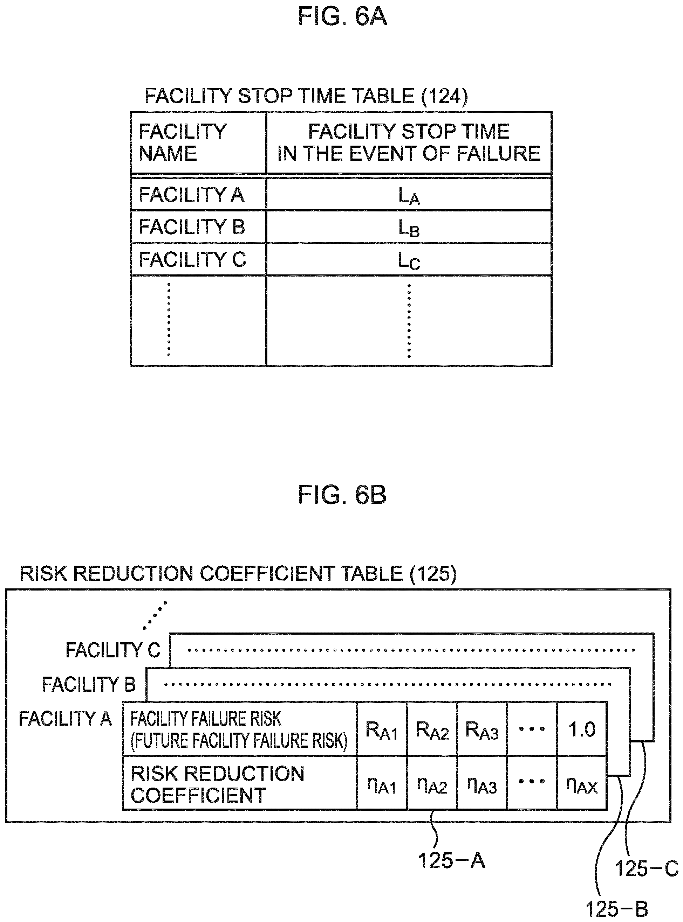

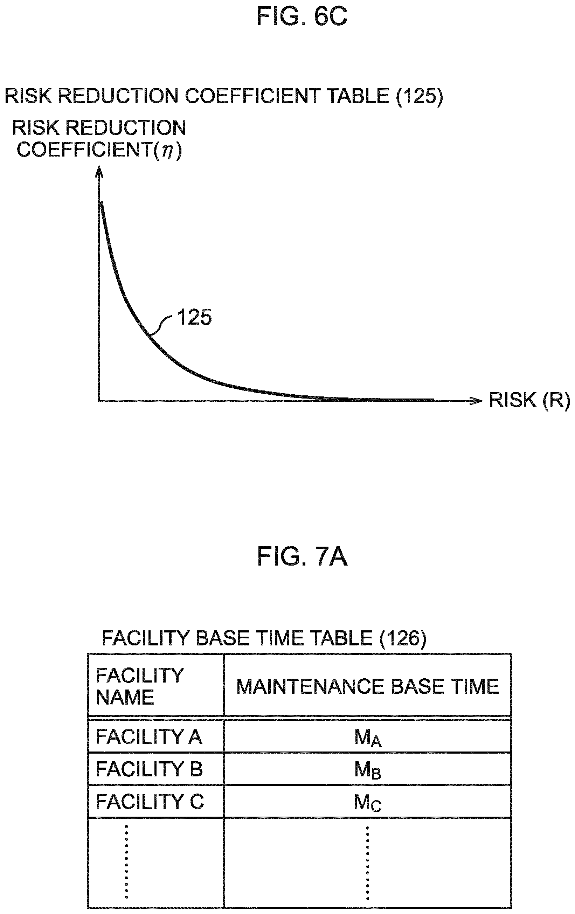

Fig. 6A to Fig. 6C are views illustrating one example of the facility stop time table 124 and one example of the risk reduction coefficient table 125 in the embodiment of the present invention. Concretely, Fig. 6A illustrates one example of the facility stop time table 124 and Fig. 6B and Fig. 6C illustrate one example of the risk reduction coefficient table 125.

The facility stop time table 124 illustrated in Fig. 6A is a table illustrating a facility stop time in the event of failure for each of the facilities 201. Concretely, in the facility stop time table 124, as for the facility A (201-A), a facility stop time in the event of failure $L_A$ is illustrated, as for the facility B (201-B), a facility stop time in the event of failure $L_B$ is illustrated, and as for the facility C (201-C), a facility stop time in the event of failure Lc is illustrated.

The risk reduction coefficient table 125 illustrated in Fig. 6B is a table illustrating, for each of the facilities 201, a relationship between a facility failure risk (future facility failure risk) and a risk reduction coefficient in the corresponding facility 201. Concretely, Fig. 6B illustrates a risk reduction coefficient table 125-A of the facility A (201-A), a risk reduction coefficient table 125-B of the facility B (201-B), and a risk reduction coefficient table 125-C of the facility C (201-C). Further, Fig. 6C illustrates one example of the risk reduction coefficient table 125 where the horizontal axis indicates the facility failure risk and the vertical axis indicates the risk reduction coefficient.

Incidentally, in this embodiment, the facility stop time table 124 illustrated in Fig. 6A and the risk reduction coefficient tables 125 illustrated in Fig. 6B and Fig. 6C can be changed appropriately by the user of the maintenance management device 100, for example, via the input unit 110 or the like as necessary, or can also be changed by the maintenance management device 100, for example, statistically analyzing actual performance data and automatically learning the resultant.

Then, the stop prediction time reduction amount calculation unit 134 first refers to, for each of the facilities 201, the risk reduction coefficient table 125 to find a risk reduction coefficient corresponding to the future facility failure risk estimated at Step S104. Then, the stop prediction time reduction amount calculation unit 134 calculates, for each of the facilities 201, a reduction amount of a facility stop prediction time by using the found risk reduction coefficient, the facility stop time in the event of failure in the corresponding facility 201, and the future facility failure risk.

Here, the example of the facility A (201-A) is explained.

First, there is explained derivation of the risk reduction coefficient in the facility A (201-A).

In the case of the facility A (201-A), the stop prediction time reduction amount calculation unit 134 refers to the risk reduction coefficient table 125-A by using the future facility failure risk $R_{At}$ estimated at Step S104 to find a risk reduction coefficient $\eta_{At}$ by interpolation calculation.

Then, there is explained derivation of the reduction amount of the facility stop prediction time in the facility A (201-A).

A reduction amount $\Delta R_{At}$ relating to the future facility failure risk $R_{At}$ can be represented by the following (3) equation by using the future facility failure risk $R_{At}$ and the risk reduction coefficient $\eta$ At.

$$\Delta R_{At} = R_{At} * \eta_{At} \quad \cdot \cdot \cdot (3)$$

Further, a facility failure risk $R_{At}'$ considering recovery by maintenance can be represented by the following (4) equation by using the future facility failure risk $R_{At}$ and the reduction amount $\Delta R_{At}$.

$$R_{At}' = R_{At} - \Delta R_{At} \quad \cdot \cdot \cdot (4)$$

The value of the facility failure risk $R_{At}'$ represents the probability that the facility failure occurs after the elapsed time, and is a result statistically found from, for example, actual failure results. Therefore, the value of the facility failure risk $R_{At}'$ is multiplied by the facility stop time (time required for recovery) in a condition of the risk = 1.0 (100% failure), to thereby find a facility stop expected value after the elapsed time. Then, in this embodiment, this facility stop expected value is defined as the "facility stop prediction time." That is, a facility stop prediction time $LM_{At}$ can be represented by the following (5) equation by using the facility stop time in the event of failure $L_A$ and the facility failure risk $R_{At}'$ in the facility A (201-A).

$$LM_{At} = L_A * R_{At}' \quad \cdot \cdot \cdot (5)$$

Further, when the (5) equation is modified by using the (4) equation and the (3) equation, the following (6) equation can be obtained.

$$LM_{At} = L_A * R_{At}(1 - \eta_{At}) \qquad \cdots (6)$$

Then, a reduction amount $\Delta LM_{At}$ of the facility stop prediction time ($LM_{At}$) by maintenance can be represented by the following (7) equation by using the facility stop time in the event of failure $L_A$, the future facility failure risk $R_{At}$, and the facility failure risk $R_{At}'$ in the facility A (201-A).

$$\Delta LM_{At} = L_A * (R_{At} - R_{At}') \qquad \cdots (7)$$

Further, when the (7) equation is modified by using the (4) equation and the (3) equation, the following (8) equation is obtained.

$$\Delta LM_{At} = L_A * R_{At} * \eta_{At} \qquad \cdots (8)$$

That is, the stop prediction time reduction amount calculation unit 134 can calculate the reduction amount $\Delta LM_{AT}$ of the facility stop prediction time in the facility A (201-A) by the (8) equation by using the risk reduction coefficient $\eta_{At}$, the facility stop time in the event of failure $L_A$, and the future facility failure risk $R_{At}$.

Although the example of the facility A (201-A) has been explained here, the same processing as that for the above-described facility A (201-A) is performed also for the facility B (201-B) and the facility C (201-C), and thereby calculations of reduction amounts $\Delta LM_{Br}$ and $\Delta LM_{Cr}$ of the facility stop prediction time are each performed.

Here, we return to the explanation of Fig. 2 again.

After the processing at Step S105 in Fig. 2 is finished, at Step S106 in Fig. 2, the maintenance prediction time calculation unit 135 then calculates, for each of the facilities 201, a maintenance prediction time by using the future facility failure risk ($R_{At}$, $R_{Bt}$, $R_{Ct}$, . . .) in the corresponding facility 201 estimated at Step S104. More concretely, in this embodiment, the maintenance prediction time calculation unit 135 calculates, for each of the facilities 201, a maintenance prediction time by using the information of the maintenance base time table 126 and the information of the maintenance time coefficient table 127 stored in the storage unit 120, in addition to the above-described future facility failure risk in the corresponding facility 201. Details of the maintenance base time table 126 and the maintenance time coefficient table 127 will be explained below.

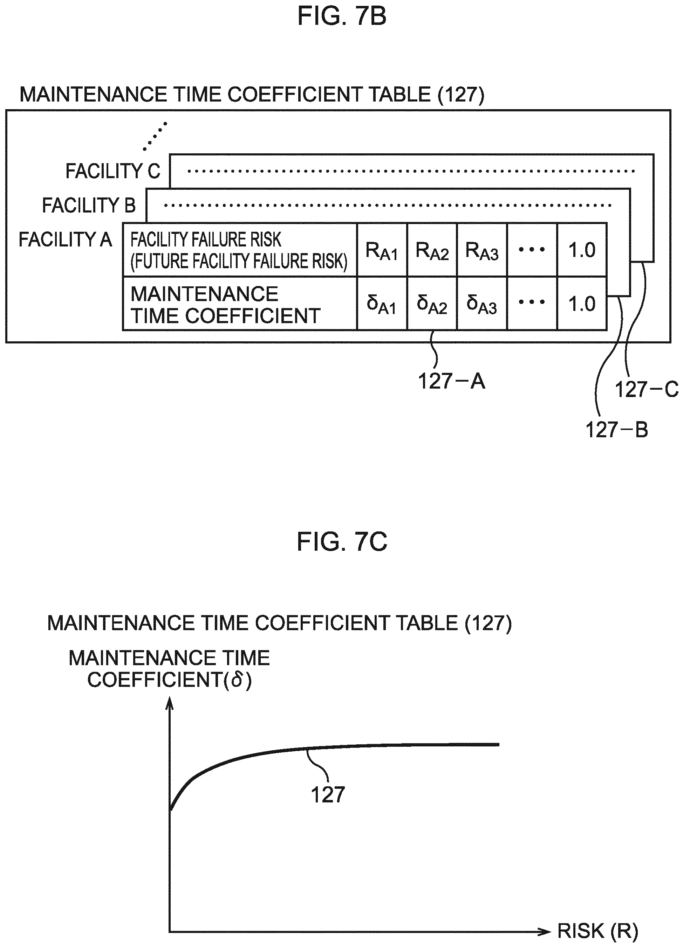

Fig. 7A to Fig. 7C are views illustrating one example of the maintenance base time table 126 and one example of the maintenance time coefficient table 127 in the embodiment of the present invention. Concretely, Fig. 7A illustrates one example of the maintenance base time table 126, and Fig. 7B and Fig. 7C illustrate one example of the maintenance time coefficient table 127.

The maintenance base time table 126 illustrated in Fig. 7A is a table that illustrates, for each of the facilities 201, a maintenance base time, which is a standard time taken for maintenance. Concretely, in the maintenance base time table 126, a maintenance base time $M_A$ is illustrated for the facility A (201-A), a maintenance base time $M_B$ is illustrated for the facility B (201-B), and a maintenance base time $M_C$ is illustrated for the facility C (201-C).

The maintenance time coefficient table 127 illustrated in Fig. 7B is a table illustrating, for each of the facilities 201, a relationship between a facility failure risk (future facility failure risk) and a maintenance time coefficient in the corresponding facility 201. Concretely, Fig. 7B illustrates a maintenance time coefficient table 127-A of the facility A (201-A), a maintenance time coefficient table 127-B of the facility B (201-B), and a maintenance time coefficient table 127-C of the facility C (201-C). Here, in the maintenance time coefficient table 127-A illustrated in Fig. 7B, there is illustrated an example where a maintenance time ratio with a maximum value of 1.0 is applied as the maintenance time coefficient. Further, Fig. 7C illustrates one example of the maintenance time coefficient table 127 where the horizontal axis indicates the facility failure risk and the vertical axis indicates the maintenance time coefficient.

Incidentally, in this embodiment, the maintenance base time table 126 illustrated in Fig. 7A and the maintenance time coefficient tables 127 illustrated in Fig. 7B and Fig. 7C can be changed appropriately by the user of the maintenance management device 100, for example, via the input unit 110 or the like as necessary, or can also be changed by the maintenance management device 100, for example, statistically analyzing actual performance data and automatically learning the resultant.

Then, the maintenance prediction time calculation unit 135 first refers to, for each of the facilities 201, the maintenance time coefficient table 127 to find a maintenance time coefficient corresponding to the future facility failure risk estimated at Step S104. Then, the maintenance prediction time calculation unit 135 calculates, for each of the facilities 201, a maintenance prediction time by using the found maintenance time coefficient and the maintenance base time in the corresponding facility 201.

Here, the example of the facility A (201-A) is explained.

First, there is explained derivation of the maintenance time coefficient in the facility A (201-A) .

In the case of the facility A (201-A), the maintenance prediction time calculation unit 135 refers to the maintenance time coefficient table 127-A by using the future facility failure risk $R_{At}$ estimated at Step S104 to find a maintenance time coefficient $\delta_{At}$ by interpolation calculation.

Then, there is explained derivation of the maintenance prediction time in the facility A (201-A).

A maintenance prediction time $M_{At}$ in the facility A (201-A) can be represented by the following (9) equation by using the found maintenance time coefficient $\delta_{At}$ and the maintenance base time $M_A$.

$$M_{At} = M_A * \delta_{At} \quad \cdot \cdot \cdot (9)$$

That is, the maintenance prediction time calculation unit 135 calculates the maintenance prediction time $M_{At}$ in the facility A (201-A) by the (9) equation by using the found maintenance time coefficient $\delta_{At}$ and the maintenance base time $M_A$.

Although the example of the facility A (201-A) has been explained here, the same processing as that for the above-described facility A (201-A) is performed also for the facility B (201-B) and the facility C (201-C), and thereby calculations of maintenance prediction times $M_{Bt}$ and Met are each performed.

Here, we return to the explanation of Fig. 2 again.

After the processing at Step S106 in Fig. 2 is finished, at Step S107 in Fig. 2, the maintenance merit calculation unit 136 then calculates, for each of the facilities 201, a maintenance merit based on the reduction amount of the facility stop prediction time calculated at Step S105 and the maintenance prediction time calculated at Step S106.

Here, the example of the facility A (201-A) is explained.

A maintenance merit $TLT_{At}$ in the facility A (201-A) can be represented by the following (10) equation by using the reduction amount $\Delta LM_{At}$ of the facility stop prediction time and the maintenance prediction time $M_{At}$.

$$TLT_{At} = \Delta LM_{At} - M_{At} \quad \cdot \cdot \cdot (10)$$

That is, the maintenance merit calculation unit 136 calculates the maintenance merit $TLT_{At}$ in the facility A (201-A) by the (10) equation based on the reduction amount $\Delta LM_{At}$ of the facility stop prediction time calculated at Step S105 and the maintenance prediction time $M_{At}$ calculated at Step S106.

Although the example of the facility A (201-A) has been explained here, the same processing as that for the above-described facility A (201-A) is performed also for the facility B (201-B) and the facility C (201-C), and thereby calculations of maintenance merits $TLT_{Bt}$ and $TLT_{Ct}$ are each performed.

Further, the maintenance merit calculation unit 136 uses the maintenance merits ($TLT_{At}$, $TLT_{Bt}$, TLTct, . . .) in the respective facilities 201 to calculate a comprehensive maintenance merit $TLT_t$ relating to the facility group 200 by the following (11) equation.

$$TLT_t = TLT_{At} + TLT_{Bt} + TLT_{Ct} + \cdots \quad \cdot \cdot \cdot (11)$$

Incidentally, in this embodiment, out of the maintenance merits ($TLT_{At}$, $TLT_{Bt}$, $TLT_{Ct}$, . . .) in the respective facilities 201, the maintenance merit that is negative (minus) in all the future sections from the current time is set to be excluded from the target used when calculating the comprehensive maintenance merit $TLT_t$ illustrated in the (11) equation.

Then, at Step S108 in Fig. 2, the optimal maintenance timing setting unit 137 sets an optimal maintenance timing relating to the maintenance for the facility group 200 based on the maintenance merits ($TLT_{At}$, $TLT_{Bt}$, $TLT_{Ct}$, . . .) in the respective facilities 201 that are calculated at Step S107.

Concretely, in this embodiment, the optimal maintenance timing setting unit 137 sets a timing at which the comprehensive maintenance merit $TLT_t$ in the (11) equation calculated by the maintenance merit calculation unit 136 is maximum as the optimal maintenance timing relating to the maintenance for the facility group 200 as in the following (12) equation.

$$\max(TLT_t) = f(t) \quad \cdot \cdot \cdot (12)$$

That is, the optimal maintenance timing setting unit 137 sets t, which maximizes the comprehensive maintenance

merit $TLT_t$ in the (12) equation, as the optimal maintenance timing relating to the maintenance for the facility group 200. Incidentally, in this embodiment, for example, in the case where t, which maximizes the comprehensive maintenance merit $TLT_t$ in the (12) equation, exceeds a planned repair date relating to the next maintenance, the optimal maintenance timing setting unit 137 sets the optimal maintenance timing relating to the maintenance for the facility group 200 so that maintenance should be performed on the planned repair date.

Then, at Step S109 in Fig. 2, the display control unit 138 performs control to display information of the optimal maintenance timing relating to the maintenance for the facility group 200 that is set at Step S108 on the display device 500. By the processing at Step S109, the information of the optimal maintenance timing of the facility group 200 is displayed on the display device 500, which makes it possible to inform the worker S who has seen this information of the optimal maintenance timing of the facility group 200.

Then, after the processing at Step S109 in Fig. 2 is finished, the processing of the flowchart illustrated in Fig. 2 is finished.

As explained above, the maintenance management device 100 according to the embodiment of the present invention is configured to include: the condition information acquisition unit 131 that acquires, for each of the facilities 201 in the facility group 200 consisting of a plurality of facilities 201, a plurality of pieces of condition information indicating the condition of the corresponding facility 201; the current failure risk calculation unit 132 that calculates, for each of the facilities 201, the current facility failure risk by using a plurality of pieces of condition information; the future failure risk estimation unit 133 that estimates, for each of the facilities 201, the future facility failure risk by using the current facility failure risk calculated by the current failure risk calculation unit 132; the maintenance merit calculation unit 136 that calculates, for each of the facilities 201, the maintenance merit based on the reduction amount of the facility stop prediction time based on the future facility failure risk and the maintenance prediction time based on the future facility failure risk; and the optimal maintenance timing setting unit 137 that sets the optimal maintenance timing of the facility group 200 based on the maintenance merits in the respective facilities 201.

According to such a configuration, by using a plurality of pieces of condition information indicating the condition of each of the facilities 201, the maintenance merit in each of the facilities 201 is calculated, and based on the calculated maintenance merits in the respective facilities 201, the optimal maintenance timing of the facility group 200 is set, thereby making it possible to set the optimal maintenance timing of the facility group 200 consisting of a plurality of facilities 201 with high accuracy.

[Example 1]

Next, there are explained examples based on the above-described embodiment of the present invention.

First, there is explained an example 1.

In the example 1, there is explained an example where the facility group 200 consists of two facilities 201 in the maintenance management system 10 illustrated in Fig. 1 to simplify the explanation. Here, in the example 1, these two facilities 201 are described as a facility K (201-K) and a facility N (201-N), and in this case, the measurement devices 300 arranged to correspond to the respective facilities 201 will also be a measurement device 300-K and a measurement device 300-N respectively.

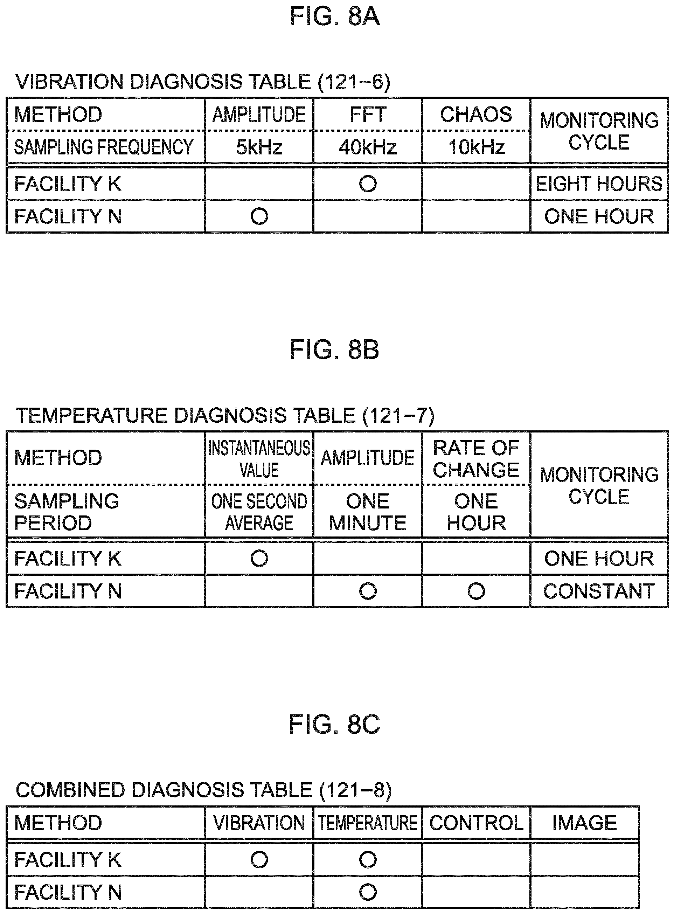

Fig. 8A to Fig. 8C are views illustrating one example of the condition information diagnosis table 121 illustrated in Fig. 1, which illustrate the example 1 in the embodiment of the present invention. In the example illustrated in Fig. 8A to Fig. 8C, the condition information diagnosis table 121 is composed of a vibration diagnosis table 121-6 illustrated in Fig. 8A, a temperature diagnosis table 121-7 illustrated in Fig. 8B, and a combined diagnosis table 121-8 illustrated in Fig. 8C.

The vibration diagnosis table 121-6 illustrated in Fig 8A is a table illustrating, for each facility 201 of the facility K (201-K) and the facility N (201-N), items of vibration (amplitude, FFT, . . .) to be measured by the corresponding vibrometer 301 and its monitoring cycle.

The temperature diagnosis table 121-7 illustrated in Fig 8B is a table illustrating, for each facility 201 of the facility K (201-K) and the facility N (201-N), items of temperature (instantaneous value, amplitude, rate of change, . . .) to be measured by the corresponding thermometer 302 and its monitoring cycle.

The combined diagnosis table 121-8 illustrated in Fig 8C is a table illustrating, for each facility 201 of the facility K (201-K) and the facility N (201-N), a plurality of pieces of condition information (amplitude, temperature, . . .) used to diagnose the condition of the corresponding facility 201 in a combined manner. In the combined diagnosis table 121-8 illustrated in Fig. 8C, "VIBRATION" corresponds to the diagnosis using the vibration diagnosis table 121-6 in Fig. 8A and "TEMPERATURE" corresponds to the diagnosis using the temperature diagnosis table 121-7 in Fig. 8B.

In the example 1, at Step S101 in Fig. 2, the condition information acquisition unit 131 performs processing to acquire information of the condition information diagnosis tables 121-6 to 121-8 illustrated in Fig. 8A to Fig. 8C. Then, in the example 1, at the following Step S102 in Fig. 2, the condition information acquisition unit 131 acquires, for each facility 201 of the facility K (201-K) and the facility N (201-N), a plurality of pieces of condition information indicating the condition of the corresponding facility 201 (vibration, temperature, . . .) based on the acquired condition information diagnosis tables 121-6 to 121-8.

In the example 1, in Step S103 in Fig. 2, the current failure risk calculation unit 132 then calculates, for each facility 201 of the facility K (201-K) and the facility N (201-N), a current facility failure risk by using a plurality of pieces of the condition information in the corresponding facility 201 acquired at Step S102. Concretely, in the example 1, the current failure risk calculation unit 132 calculates a current facility failure risk for each of the facilities 201 by using the information of the current failure risk evaluation table 122 stored in the storage unit 120. Details of the current failure risk evaluation table 122 in the example 1 will be explained below.

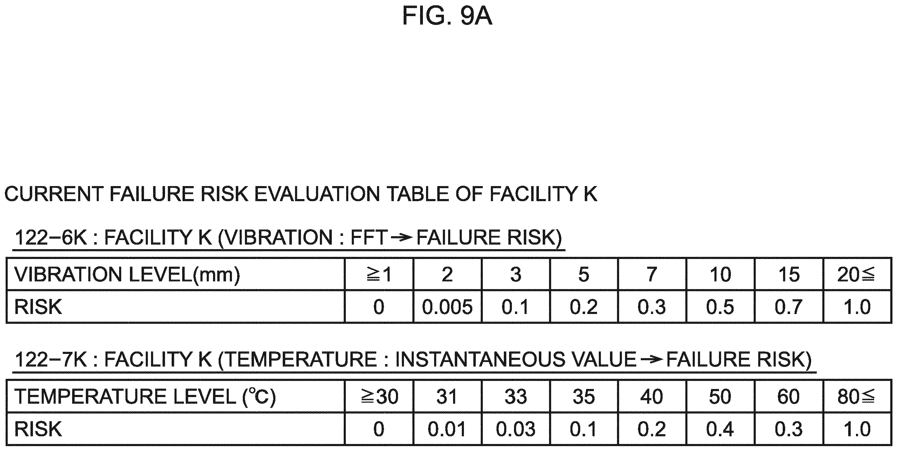

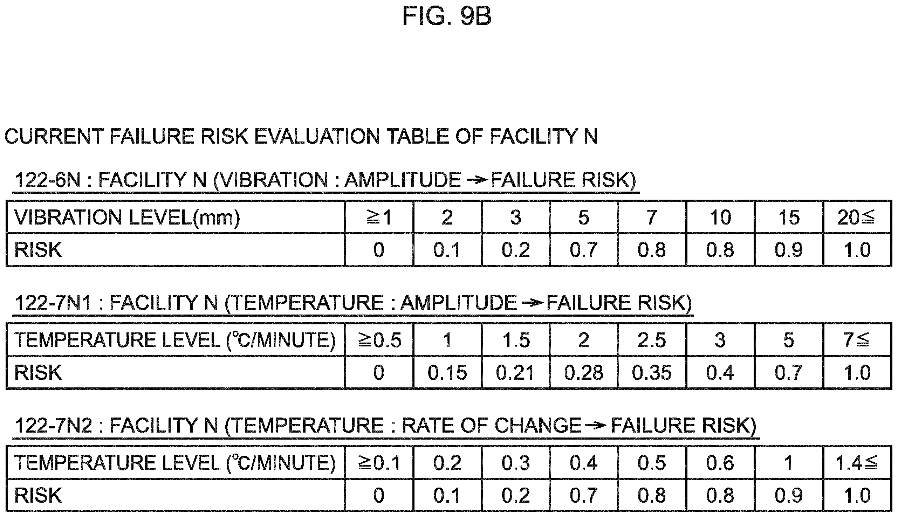

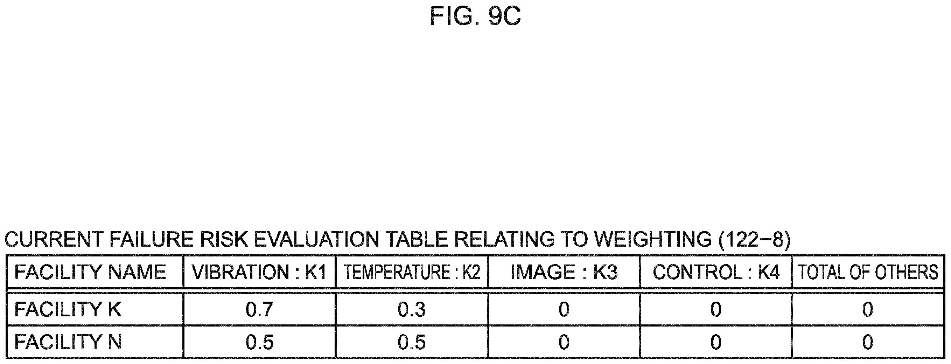

Fig. 9A to Fig. 9C are views illustrating one example of the current failure risk evaluation table 122 illustrated in Fig. 1, which illustrate the example 1 in the embodiment of the present invention. In the example illustrated in Fig. 9A to Fig. 9C, the current failure risk evaluation table 122 is composed of current failure risk evaluation tables for vibration 122-6K and 122-6N illustrated in Fig. 9A and Fig. 9B, current failure risk evaluation tables for temperature 122-7K, 122-7N1, and 122-7N2 illustrated in Fig. 9A and Fig. 9B, and a current failure risk evaluation table relating to weighting 122-8 illustrated in Fig. 9C.

The current failure risk evaluation tables for vibration 122-6K and 122-6N illustrated in Fig. 9A and Fig. 9B are tables corresponding to the facility K (201-K) and the facility N (201-N) in the vibration diagnosis table 121-6 illustrated in Fig. 8A respectively, and are tables each illustrating a relationship between a level in the items (amplitude, FFT, . . .) of vibration and a current failure risk.

The current failure risk evaluation tables for temperature 122-7K, 122-7N1, and 122-7N2 illustrated in Fig. 9A and Fig. 9B are tables corresponding to the facility K (201-K) and the facility N (201-N) in the temperature diagnosis table 121-7 illustrated in Fig. 8B respectively, and are tables each illustrating a relationship between a level in the items (instantaneous value, amplitude, rate of change, . . .) of temperature and a current failure risk.

The current failure risk evaluation table relating to weighting 122-8 illustrated in Fig. 9C is a table illustrating a weighting coefficient to be used when the current failure risk calculation unit 132 calculates the current facility failure risk for each facility 201 of the facility K (201-K) and the facility N (201-N).

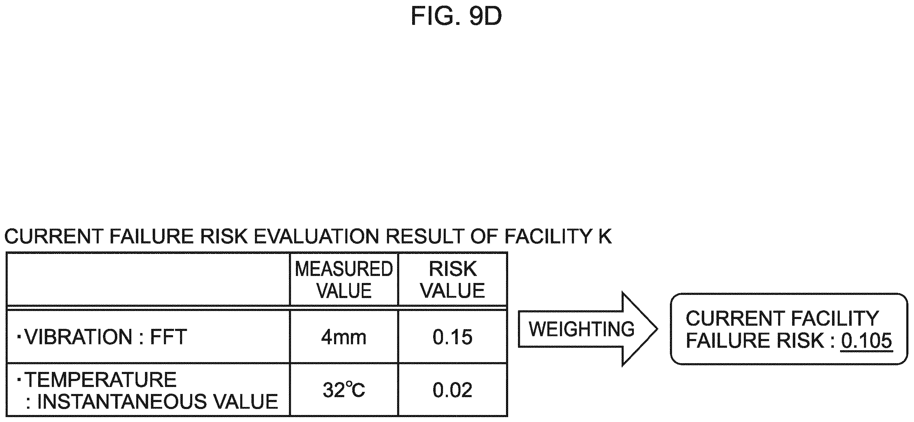

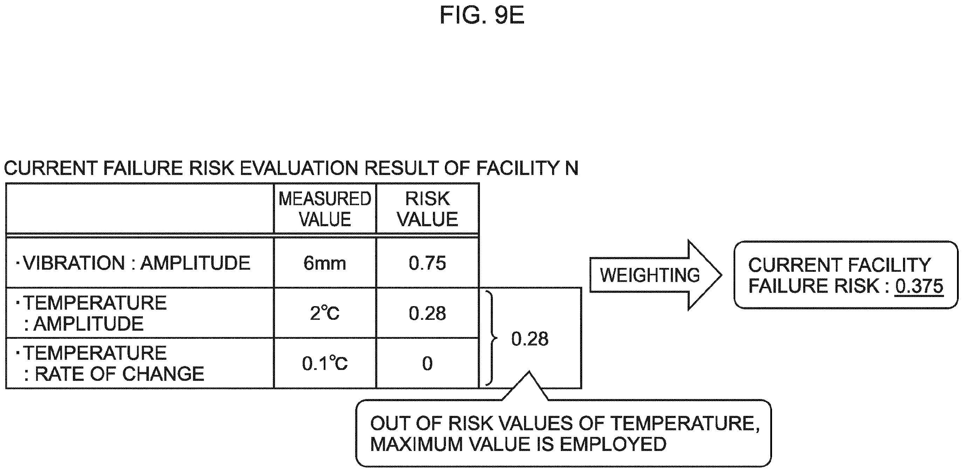

Then, the current failure risk calculation unit 132 uses the information of the current failure risk evaluation tables 122-6 to 122-8 illustrated in Fig. 9A to Fig. 9C and a plurality of pieces of the condition information (vibration, temperature, . . .) in each facility 201 of the facility K (201-K) and the facility N (201-N) that are acquired at Step S102 to calculate the current facility failure risk for each of the facilities 201. Here, Fig. 9D illustrates a current facility failure risk evaluation result of the facility K (201-K), and Fig. 9E illustrates a current facility failure risk evaluation result of the facility N (201-N).

Fig. 9D illustrates that a value of 0.105 has been calculated as the current facility failure risk (to be described as "$R_K$" below) in the facility K (201-K) .

Fig. 9E illustrates that a value of 0.375 has been calculated as the current facility failure risk (to be described as "$R_N$" below) in the facility N (201-N). On this occasion, in the facility N (201-N), in terms of "TEMPERATURE," two items of "AMPLITUDE" and "RATE OF CHANGE" are evaluated, and thus, out of evaluation results of the respective items, the evaluation result with a higher value of the failure risk (concretely, the evaluation result of the item "AMPLITUDE") is employed as the evaluation result of "TEMPERATURE."

Then, in the example 1, the following processing is performed as the same processing as that in the above-described embodiment of the present invention.

First, at Step S104 in Fig. 2, the future failure risk estimation unit 133 estimates, for each facility 201 of the facility K (201-K) and the facility N (201-N), a future facility failure risk by using the current facility failure risk ($R_K$, $R_N$) in the corresponding facility 201 calculated at Step S103. Hereinafter, the future facility failure risks in the facility K (201-K) and the facility N (201-N) estimated here are described as future facility failure risks $R_{Kt}$ and $R_{Nt}$ respectively.

Then, at Step S105 in Fig. 2, the stop prediction time reduction amount calculation unit 134 calculates, for each facility 201 of the facility K (201-K) and the facility N (201-N), a reduction amount of a facility stop prediction time by using the future facility failure risk ($R_{Kt}$, $R_{Nt}$) in the corresponding facility 201 estimated at Step S104. Hereinafter, the reduction amounts for the facility stop prediction time in the facility K (201-K) and the facility N (201-N) that are calculated here are described as reduction amounts $\Delta LM_{Kt}$ and $\Delta LM_{Nt}$ for the facility stop prediction time respectively.

Then, at Step S106 in Fig. 2, the maintenance prediction time calculation unit 135 calculates, for each facility 201 of the facility K (201-K) and the facility N (201-N), a maintenance prediction time by using the future facility failure risk ($R_{Kt}$, $R_{Nt}$) in the corresponding facility 201 estimated at Step S104. Hereinafter, the maintenance prediction times in the facility K (201-K) and the facility N (201-N) calculated here are described as maintenance prediction times $M_{Kt}$ and $M_{Nt}$ respectively.

Then, at Step S107 in Fig. 2, the maintenance merit calculation unit 136 calculates, for each facility 201 of the facility K (201-K) and the facility N (201-N), a maintenance merit based on the reduction amount ($\Delta LM_{Kt}$, $\Delta LM_{Nt}$) of the facility stop prediction time calculated at Step S105 and the maintenance prediction time ($M_{Kt}$, $M_{Nt}$) calculated at Step S106. Hereinafter, the maintenance merits in the facility K (201-K) and the facility N (201-N) calculated here are described as maintenance merits $TLT_{Kt}$ and $TLT_{Nt}$ respectively.

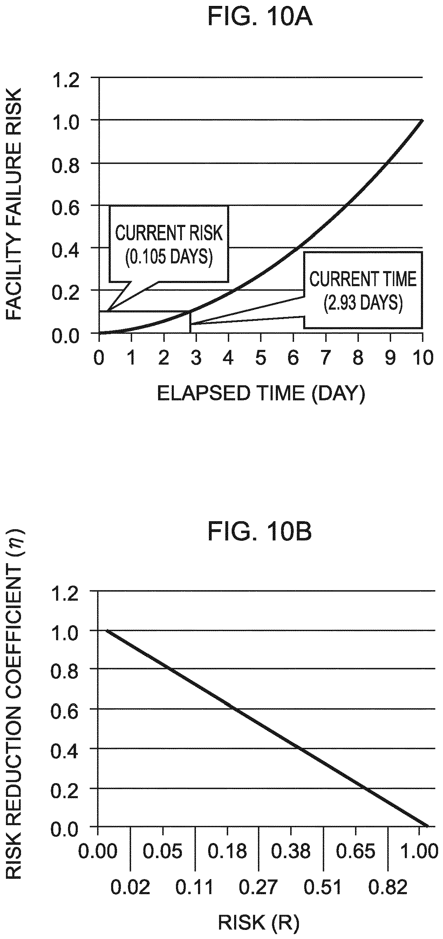

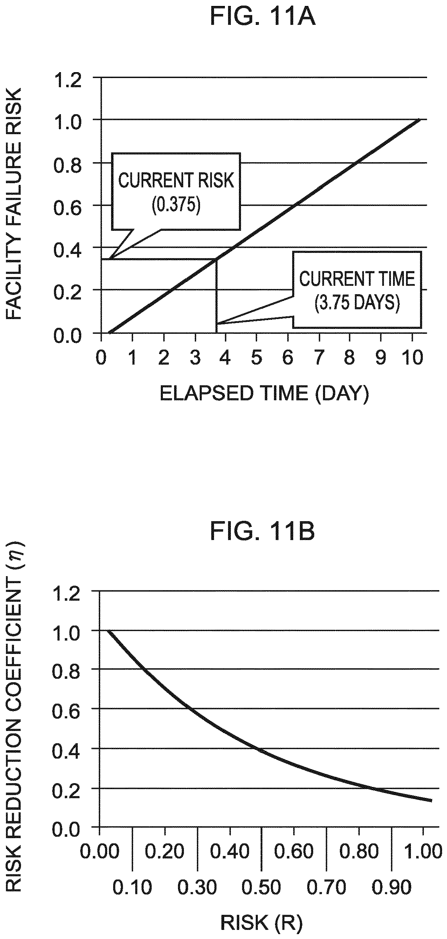

There will be hereinafter explained concrete examples of pieces of the processing explained here while using Fig. 10A to Fig. 10D and Fig. 11A to Fig. 11D.

First, there are explained concrete processing examples of the facility K (201-K).

Fig. 10A to Fig. 10D are views illustrating a concrete processing example up to the calculation processing of the maintenance merit in the facility K (201-K), which illustrate the example 1 in the embodiment of the present invention.

Fig. 10A illustrates a facility failure risk estimation table 123-K of the facility K (201-K). Then, at Step S104 in Fig. 2, the future failure risk estimation unit 133 first refers to the facility failure risk estimation table 123-K illustrated in Fig. 10A to find a current time corresponding to a current facility failure risk $R_K$ (0.105 illustrated in Fig. 9D) in the facility K (201-K) calculated at Step S103. The example illustrated in Fig. 10A illustrates that 2.93 days have been found as the current time. Then, the future failure risk estimation unit 133 estimates a facility failure risk due to each elapsed time from the current time in the facility failure risk estimation table 123-K illustrated in Fig. 10A as the future facility failure risk $R_{Kt}$.

Fig. 10B illustrates a risk reduction coefficient table 125-K of the facility K (201-K). Further, in the example 1, a facility stop time in the event of failure $L_K$ in the facility K (201-K) is set to 30 hours. Then, at Step S105 in Fig. 2, the stop prediction time reduction amount calculation unit 134 first refers to the risk reduction coefficient table 125-K illustrated in Fig. 10B to find a risk reduction coefficient corresponding to the future facility failure risk $R_{Kt}$ in the facility K (201-K) estimated at Step S104. Then, the stop prediction time reduction amount calculation unit 134 calculates the reduction amount $\Delta LM_{Kt}$ of the facility stop prediction time in the facility K (201-K) by using the found risk reduction coefficient, the facility stop time in the event of failure $L_K$ (30 hours) in the facility K (201-K), and the future facility failure risk $R_{Kt}$. Concretely, the stop prediction time reduction amount calculation unit 134 calculates the reduction amount $\Delta LM_{Kt}$ of the facility stop prediction time based on the above-described (8) equation.

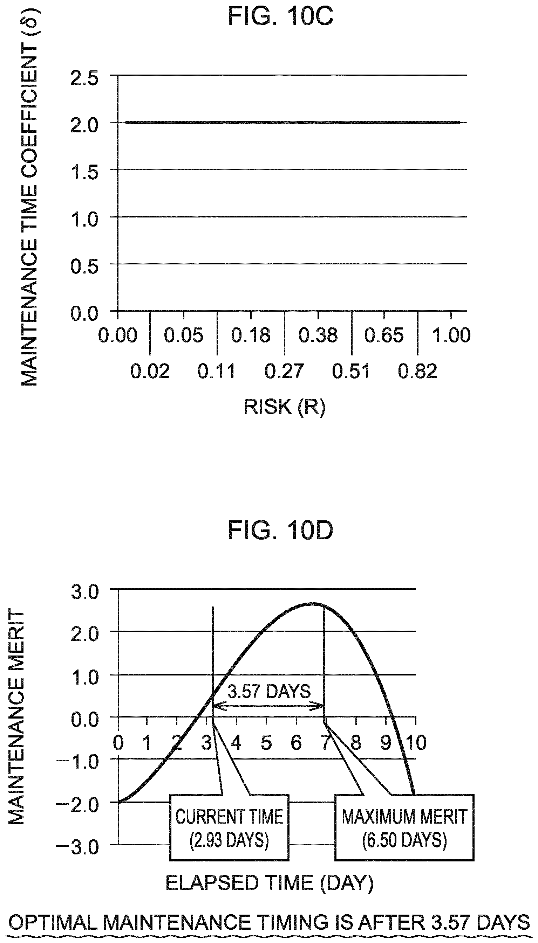

Fig. 10C illustrates a maintenance time coefficient table 127-K of the facility K (201-K). Further, in the example 1, a maintenance base time $M_K$ in the facility K (201-K) is set to two hours. Then, at Step S106 in Fig. 2, the maintenance prediction time calculation unit 135 first refers to the maintenance time coefficient table 127-K illustrated in Fig. 10C to find a maintenance time coefficient corresponding to the future facility failure risk $R_{Kt}$ in the facility K (201-K) estimated at Step S104. Then, the maintenance prediction time calculation unit 135 calculates the maintenance prediction time $M_{Kt}$ in the facility K (201-K) by using the found maintenance time coefficient and the maintenance base time $M_K$ (two hours) in the facility K (201-K). Concretely, the maintenance prediction time calculation unit 135 calculates the maintenance prediction time $M_{Kt}$ based on the above-described (9) equation.

Then, at Step S107 in Fig. 2, the maintenance merit calculation unit 136 calculates the maintenance merit $TLT_{Kt}$ in the facility K (201-K) based on the reduction amount $\Delta LM_{Kt}$ of the facility stop prediction time calculated at Step S105 and the maintenance prediction time $M_{Kt}$ calculated at Step S106. Concretely, the maintenance merit calculation unit 136 calculates the maintenance merit $TLT_{Kt}$ based on the above-described (10) equation. Fig. 10D illustrates a calculation result of the maintenance merit $TLT_{Kt}$ in the facility K (201-K) corresponding to an elapsed time. Fig. 10D illustrates that the optimal maintenance timing is 3.57 days after the current time (2.93 days) in the facility K (201-K).

Then, there are explained concrete processing examples of the facility N (201-N).

Fig. 11A to Fig. 11D are views illustrating a concrete processing example up to the calculation processing of the maintenance merit in the facility N (201-N), which illustrate the example 1 in the embodiment of the present invention.

Fig. 11A illustrates a facility failure risk estimation table 123-N of the facility N (201-N). Then, at Step S104 in Fig. 2, the future failure risk estimation unit 133 first refers to the facility failure risk estimation table 123-N illustrated in Fig. 11A to find a current time corresponding to a current facility failure risk $R_N$ (0.375 illustrated in Fig. 9E) in the facility N (201-N) calculated at Step S103. The example illustrated in Fig. 11A illustrates that 3.75 days have been found as the current time. Then, the future failure risk estimation unit 133 estimates a facility failure risk due to each elapsed time from the current time in the facility failure risk estimation table 123-N illustrated in Fig. 11A as the future facility failure risk $R_{Nt}$.

Fig. 11B illustrates a risk reduction coefficient table 125-N of the facility N (201-N). Further, in the example 1, a facility stop time in the event of failure $L_N$ in the facility N (201-N) is set to 25 hours. Then, at Step S105 in Fig. 2, the stop prediction time reduction amount calculation unit 134 first refers to the risk reduction coefficient table 125-N illustrated in Fig. 11B to find a risk reduction coefficient corresponding to the future facility failure risk $R_{Nt}$ in the facility N (201-N) estimated at Step S104. Then, the stop prediction time reduction amount calculation unit 134 calculates the reduction amount $\Delta LM_{Nt}$ of the facility stop prediction time in the facility N (201-N) by using the found risk reduction coefficient, the facility stop time in the event of failure $L_N$ (25 hours) in the facility N (201-N), and the future facility failure risk $R_{Nt}$. Concretely, the stop prediction time reduction amount calculation unit 134 calculates the reduction amount $\Delta LM_{Nt}$ of the facility stop prediction time based on the above-described (8) equation.

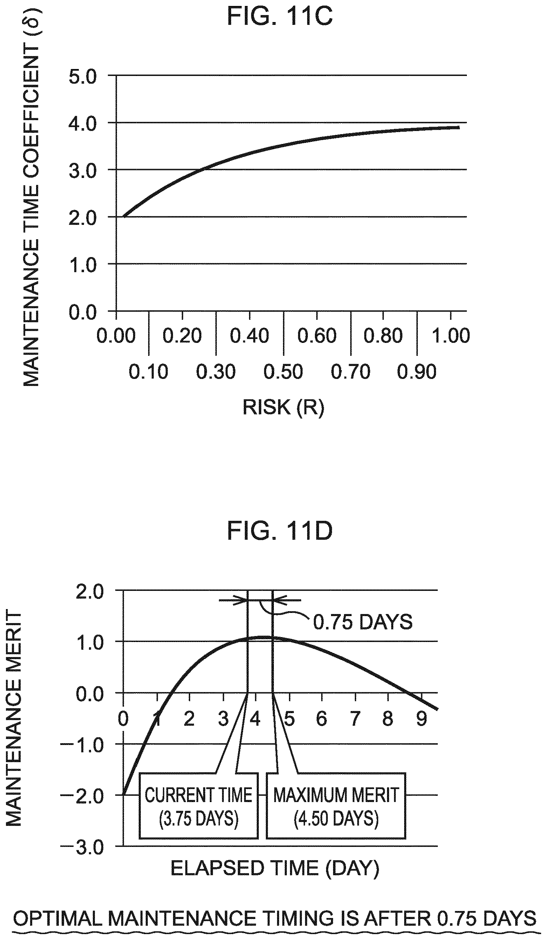

Fig. 11C illustrates a maintenance time coefficient table 127-N of the facility N (201-N). Further, in the example 1, a maintenance base time $M_N$ in the facility N (201-N) is set to two hours. Then, at Step S106 in Fig. 2, the maintenance prediction time calculation unit 135 first refers to the maintenance time coefficient table 127-N illustrated in Fig. 11C to find a maintenance time coefficient corresponding to the future facility failure risk $R_{Nt}$ in the facility N (201-N) estimated at Step S104. Then, the maintenance prediction time calculation unit 135 calculates the maintenance prediction time $M_{Nt}$ in the facility N (201-N) by using the found maintenance time coefficient and the maintenance base time $M_N$ (two hours) in the facility N (201-N). Concretely, the maintenance prediction time calculation unit 135 calculates the maintenance prediction time $M_{Nt}$ based on the above-described (9) equation.

Then, at Step S107 in Fig. 2, the maintenance merit calculation unit 136 calculates the maintenance merit $TLT_{Nt}$ in the facility N (201-N) based on the reduction amount $\Delta LM_{Nt}$ of the facility stop prediction time calculated at Step S105 and the maintenance prediction time $M_{Nt}$ calculated at Step S106. Concretely, the maintenance merit calculation unit 136 calculates the maintenance merit $TLT_{Nt}$ based on the above-described (10) equation. Fig. 11D illustrates a calculation result of the maintenance merit $TLT_{Nt}$ in the facility N (201-N) corresponding to an elapsed time. Fig. 11D illustrates that the optimal maintenance timing is 0.75 days after the current time (3.75 days) in the facility N (201-N).

As explained above, by pieces of the processing explained while using Fig. 10A to Fig. 10D, the maintenance merit $TLT_{Kt}$ in the facility K (201-K) is calculated, and by pieces of the processing explained while using Fig. 11A to Fig. 11D, the maintenance merit $TLT_{Nt}$ in the facility N (201-N) is calculated.

Thereafter, the maintenance merit calculation unit 136 calculates the comprehensive maintenance merit $TLT_t$ relating to the facility group 200 based on the above-described (11) equation by using the maintenance merits ($TLT_{Kt}$, $TLT_{Nt}$) in the facility K (201-K) and the facility N (201-N).

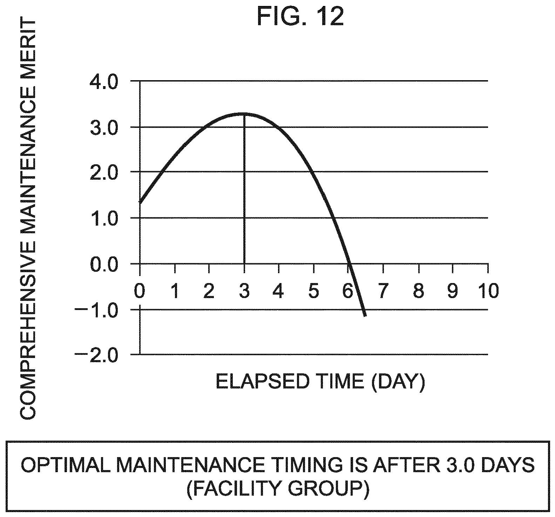

Fig. 12 is a view illustrating a calculation result of the comprehensive maintenance merit TLTt relating to the facility group 200, which illustrates the example 1 in the embodiment of the present invention.

Then, at Step S108 in Fig. 2, the optimal maintenance timing setting unit 137 sets a timing at which the comprehensive maintenance merit TLTt illustrated in Fig. 12 is maximum as the optimal maintenance timing relating to the maintenance for the facility group 200. Concretely, Fig. 12 illustrates that the optimal maintenance timing of the facility group 200 is set after 3.0 days.

Thereafter, at Step S109 in Fig. 2, the display control unit 138 performs control to display information of the optimal maintenance timing of the facility group 200 that is set at Step S108 on the display device 500. By the processing of Step S109, the information of the optimal maintenance timing of the facility group 200 is displayed on the display device 500, which makes it possible to inform the worker S who has seen this information of the optimal maintenance timing of the facility group 200.

[Example 2]

Next, there will be explained an example 2.

In the example 2, there is explained an example where the facility group 200 consists of two facilities 201 in the maintenance management system 10 illustrated in Fig. 1 to simplify the explanation. Here, in the example 2, these two facilities 201 are described as a facility S (201-S) and a facility T (201-T), and in this case, the measurement devices 300 arranged to correspond to the respective facilities 201 will also be a measurement device 300-S and a measurement device 300-T respectively.

Here, it is set in the example 2 that by pieces of the processing at Step S101 to S103 in Fig. 2, a current facility failure risk $R_S$ in the facility S (201-S) is calculated to be 0.25 and a current facility failure risk $R_T$ in the facility T (201-T) is calculated to be 0.38.

Then, in the example 2, the following processing is performed as the same processing as that in the above-described embodiment of the present invention.

First, at Step S104 in Fig. 2, the future failure risk estimation unit 133 estimates, for each facility 201 of the facility S (201-S) and the facility T (201-T), a future facility failure risk by using the current facility failure risk ($R_S$, $R_T$) in the corresponding facility 201 calculated at Step S103. Hereinafter, the future facility failure risks in the facility S (201-S) and the facility T (201-T) estimated here are described as future facility failure risks $R_{St}$ and $R_{Tt}$ respectively.

Then, at Step S105 in Fig. 2, the stop prediction time reduction amount calculation unit 134 calculates, for each facility 201 of the facility S (201-S) and the facility T (201-T), a reduction amount of a facility stop prediction time by using the future facility failure risk ($R_{St}$, $R_{Tt}$) in the corresponding facility 201 estimated at Step S104. Hereinafter, the reduction amounts for the facility stop prediction time in the facility S (201-S) and the facility T (201-T) that are calculated here are described as reduction amounts $\Delta LM_{St}$ and $\Delta LM_{Tt}$ for the facility stop prediction time respectively.

Then, at Step S106 in Fig. 2, the maintenance prediction time calculation unit 135 calculates, for each facility 201 of the facility S (201-S) and the facility T (201-T), a maintenance prediction time by using the future facility failure risk ($R_{St}$, $R_{Tt}$) in the corresponding facility 201 estimated at Step S104. Hereinafter, the maintenance prediction times in the facility S (201-S) and the facility T (201-T) calculated here are described as maintenance prediction times $M_{St}$ and $M_{Tt}$ respectively.

Then, at Step S107 in Fig. 2, the maintenance merit calculation unit 136 calculates, for each facility 201 of the facility S (201-S) and the facility T (201-T), a maintenance merit based on the reduction amount ($\Delta LM_{St}$, $\Delta LM_{Tt}$) of the

facility stop prediction time calculated at Step S105 and the maintenance prediction time ($M_{St}$, $M_{Tt}$) calculated at Step S106. Hereinafter, the maintenance merits in the facility S (201-S) and the facility T (201-T) calculated here are described as maintenance merits TLTst and $TLT_{Tt}$ respectively.

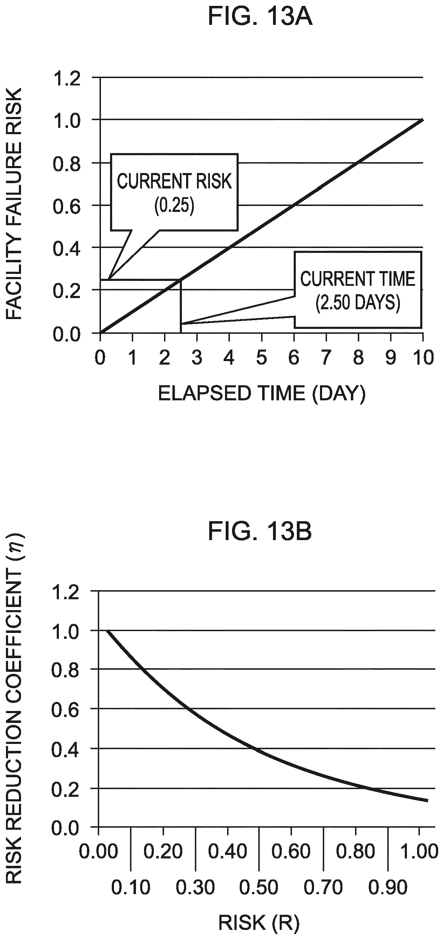

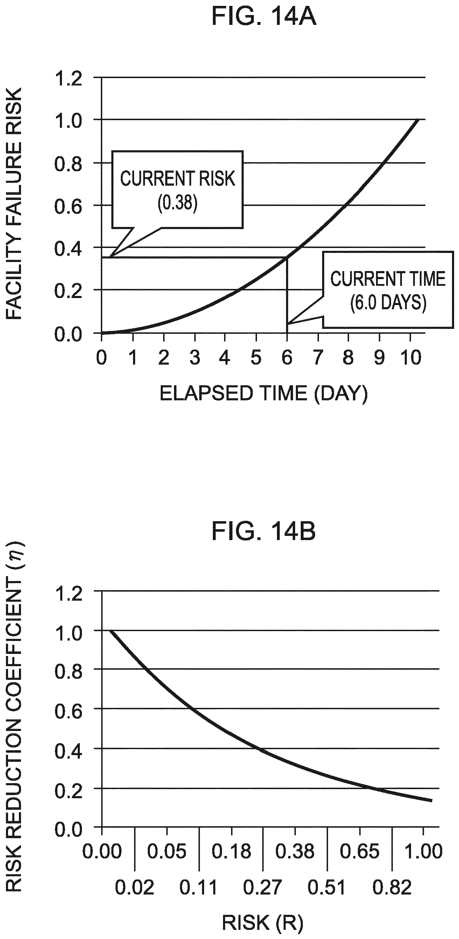

There will be hereinafter explained concrete examples of pieces of the processing explained here while using Fig. 13A to Fig. 13D and Fig. 14A to Fig. 14D.

First, there are explained concrete processing examples of the facility S (201-S).

Fig. 13A to Fig. 13D are views illustrating a concrete processing example up to the calculation processing of the maintenance merit in the facility S (201-S), which illustrate the example 2 in the embodiment of the present invention.

Fig. 13A illustrates a facility failure risk estimation table 123-S of the facility S (201-S). Then, at Step S104 in Fig. 2, the future failure risk estimation unit 133 first refers to the facility failure risk estimation table 123-S illustrated in Fig. 13A to find a current time corresponding to the current facility failure risk Rs (0.25 described above) in the facility S (201-S) calculated at Step S103. The example illustrated in Fig. 13A illustrates that 2.50 days have been found as the current time. Then, the future failure risk estimation unit 133 estimates a facility failure risk due to each elapsed time from the current time in the facility failure risk estimation table 123-S illustrated in Fig. 13A as the future facility failure risk $R_{St}$.

Fig. 13B illustrates a risk reduction coefficient table 125-S of the facility S (201-S). Further, in the example 2, a facility stop time in the event of failure $L_S$ in the facility S (201-S) is set to five hours. Then, at Step S105 in Fig. 2, the stop prediction time reduction amount calculation unit 134 first refers to the risk reduction coefficient table 125-S illustrated in Fig. 13B to find a risk reduction coefficient corresponding to the future facility failure risk $R_{St}$ in the facility S (201-S) estimated at Step S104. Then, the stop prediction time reduction amount calculation unit 134 calculates the reduction amount $\Delta LM_{St}$ of the facility stop prediction time in the facility S (201-S) by using the found risk reduction coefficient, the facility stop time in the event of failure $L_S$ (five hours) in the facility S (201-S), and the future facility failure risk Rst. Concretely, the stop prediction time reduction amount calculation unit 134 calculates the reduction amount $\Delta LM_{St}$ of the facility stop prediction time based on the above-described (8) equation.

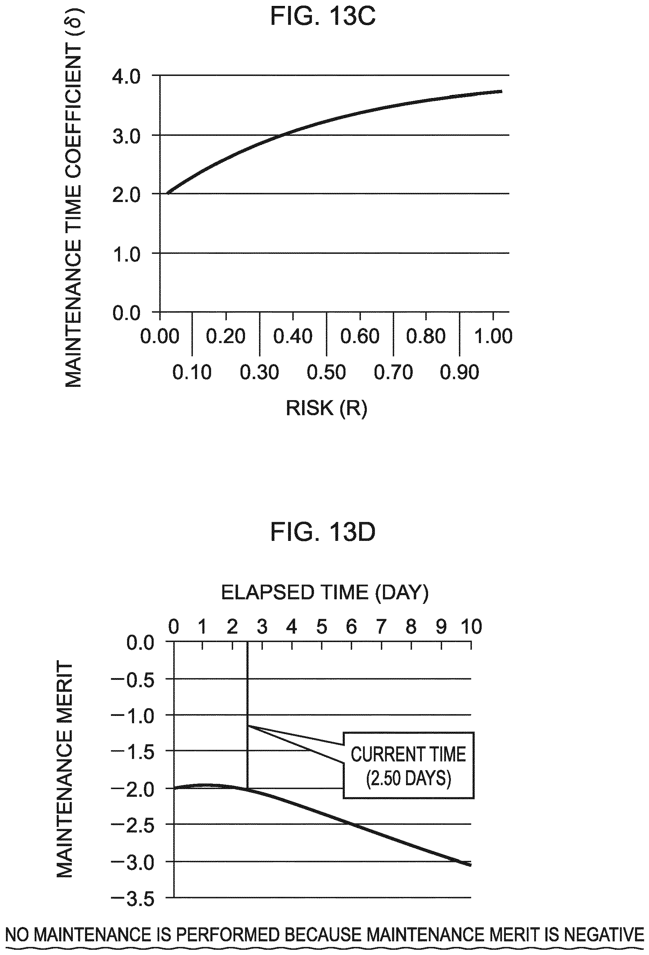

Fig. 13C illustrates a maintenance time coefficient table 127-S of the facility S (201-S). Further, in the example 2, a maintenance base time Ms in the facility S (201-S) is set to two hours. Then, at Step S106 in Fig. 2, the maintenance prediction time calculation unit 135 first refers to the maintenance time coefficient table 127-S illustrated in Fig. 13C to find a maintenance time coefficient corresponding to the future facility failure risk Rst in the facility S (201-S) estimated at Step S104. Then, the maintenance prediction time calculation unit 135 calculates the maintenance prediction time Mst in the facility S (201-S) by using the found maintenance time coefficient and the maintenance base time Ms (two hours) in the facility S (201-S). Concretely, the maintenance prediction time calculation unit 135 calculates the maintenance prediction time Mst based on the above-described (9) equation.

Then, at Step S107 in Fig. 2, the maintenance merit calculation unit 136 calculates the maintenance merit $TLT_{St}$ in the facility S (201-S) based on the reduction amount $\Delta LM_{St}$ of the facility stop prediction time calculated at Step S105 and the maintenance prediction time $M_{St}$ calculated at Step S106. Concretely, the maintenance merit calculation unit 136 calculates the maintenance merit $TLT_{St}$ based on the above-described (10) equation. Fig. 13D illustrates a calculation result of the maintenance merit TLTst in the facility S (201-S) corresponding to an elapsed time. In Fig. 13D, the maintenance merit TLTst is negative (minus) in all the future sections from the current time, and thus, this facility S (201-S) is to be excluded from the calculation of the above-described (11) equation (namely, the maintenance merit of the facility S (201-S) is not considered).

Then, there are explained concrete processing examples of the facility T (201-T).

Fig. 14A to Fig. 14D are views illustrating a concrete processing example up to the calculation processing of the maintenance merit in the facility T (201-T), which illustrate the example 2 in the embodiment of the present invention.

Fig. 14A illustrates a facility failure risk estimation table 123-T of the facility T (201-T). Then, at Step S104 in Fig. 2, the future failure risk estimation unit 133 first refers to the facility failure risk estimation table 123-T illustrated in Fig. 14A to find a current time corresponding to the current facility failure risk $R_T$ (0.38 described above) in the facility T (201-T) calculated at Step S103. The example illustrated in Fig. 14A illustrates that 6.0 days have been found as the current time. Then, the future failure risk estimation unit 133 estimates a facility failure risk due to each elapsed time from the current time in the facility failure risk estimation table 123-T illustrated in Fig. 14A as the future facility failure risk $R_{Tt}$.

Fig. 14B illustrates a risk reduction coefficient table 125-T of the facility T (201-T). Further, in the example 2, a facility stop time in the event of failure $L_T$ in the facility T (201-T) is set to 30 hours. Then, at Step S105 in Fig. 2, the stop prediction time reduction amount calculation unit 134 first refers to the risk reduction coefficient table 125-T illustrated in Fig. 14B to find a risk reduction coefficient corresponding to the future facility failure risk $R_{Tt}$ in the facility T (201-T) estimated at Step S104. Then, the stop prediction time reduction amount calculation unit 134 calculates the reduction amount $\Delta LM_{Tt}$ of the facility stop prediction time in the facility T (201-T) by using the found risk reduction coefficient, the facility stop time in the event of failure $L_T$ (30 hours) in the facility T (201-T), and the future facility failure risk $R_{Tt}$. Concretely, the stop prediction time reduction amount calculation unit 134 calculates the reduction amount $\Delta LM_{Tt}$ of the

facility stop prediction time based on the above-described (8) equation.

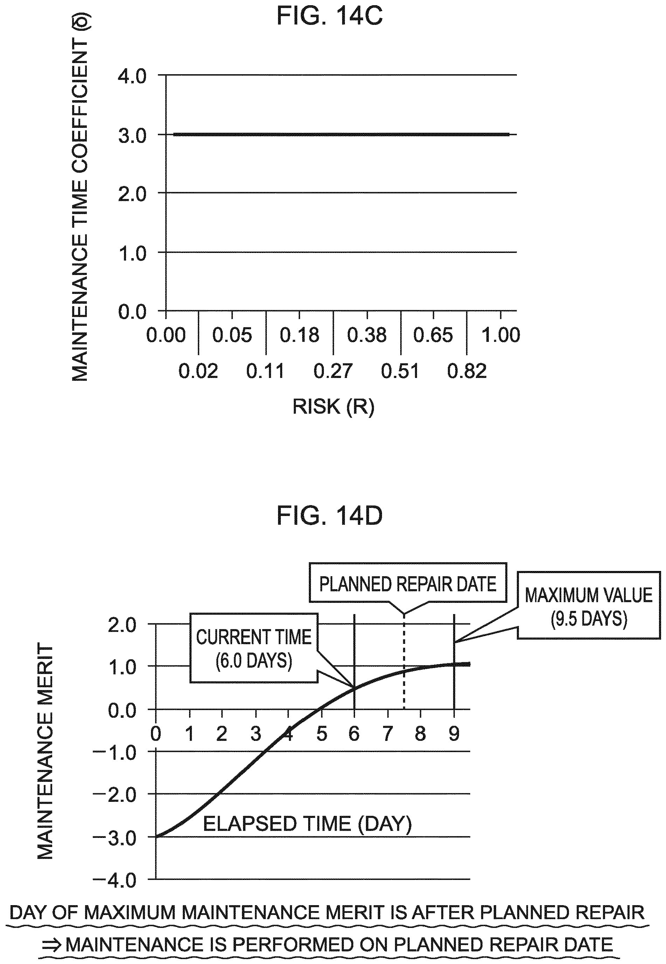

Fig. 14C illustrates a maintenance time coefficient table 127-T of the facility T (201-T). Further, in the example 2, a maintenance base time $M_T$ in the facility T (201-T) is set to three hours. Then, at Step S106 in Fig. 2, the maintenance prediction time calculation unit 135 first refers to the maintenance time coefficient table 127-T illustrated in Fig. 14C to find a maintenance time coefficient corresponding to the future facility failure risk $R_{Tt}$ in the facility T (201-T) estimated at Step S104. Then, the maintenance prediction time calculation unit 135 calculates the maintenance prediction time $M_{Tt}$ in the facility T (201-T) by using the found maintenance time coefficient and the maintenance base time $M_T$ (three hours) in the facility T (201-T). Concretely, the maintenance prediction time calculation unit 135 calculates the maintenance prediction time $M_{Tt}$ based on the above-described (9) equation.

Then, at Step S107 in Fig. 2, the maintenance merit calculation unit 136 calculates the maintenance merit $TLT_{Tt}$ in the facility T (201-T) based on the reduction amount $\Delta LM_{Tt}$ of the facility stop prediction time calculated at Step S105 and the maintenance prediction time $M_{Tt}$ calculated at Step S106. Concretely, the maintenance merit calculation unit 136 calculates the maintenance merit $TLT_{Tt}$ based on the above-described (10) equation. Fig. 14D illustrates a calculation result of the maintenance merit $TLT_{Tt}$ in the facility T (201-T) corresponding to an elapsed time. In Fig. 14D, the maximum value of the maintenance merit $TLT_{Tt}$ (9.5 days) is after a planned repair date (7.5 days), which is a planned repair timing of the facility group 200, and thus this planned repair date (7.5 days) is the optimal maintenance timing of the facility T (201-N). That is, the optimal maintenance timing is 1.5 days after the current time (6.0 days).

Thereafter, the maintenance merit calculation unit 136 calculates the comprehensive maintenance merit TLTt relating to the facility group 200 based on the above-described (11) equation by using the maintenance merits ($TLT_{St}$, $TLT_{Tt}$) in the facility S (201-S) and the facility T (201-T). On this occasion, as described above, the maintenance merit $TLT_{St}$ in the facility S (201-S) illustrated in Fig. 13D is negative (minus) in all the future sections from the current time, to thus be excluded from the target used when calculating the comprehensive maintenance merit $TLT_t$ illustrated in the above-described (11) equation, resulting in that the comprehensive maintenance merit TLTt relating to the facility group 200 is to be the maintenance merit $TLT_{Tt}$ in the facility T (201-T).

Then, at Step S108 in Fig. 2, the optimal maintenance timing setting unit 137 sets an optimal maintenance timing relating to the maintenance for the facility group 200 based on the comprehensive maintenance merit $TLT_t$ calculated at Step S107. Concretely, in the example 2, the maximum value of the maintenance merit $TLT_{Tt}$ (9.5 days) in the facility T (201-T) illustrated in Fig. 14D is after the planned repair date (7.5 days), which is the planned repair timing for the facility group 200, and thus the optimal maintenance timing setting unit 137 sets this planned repair date (7.5 days) as the optimal maintenance timing of the facility group 200. That is, the optimal maintenance timing setting unit 137 sets 1.5 days after the current time (6.0 days) as the optimal maintenance timing of the facility group 200.

(Other embodiments)

The present invention can be achieved also by processing in which the program 128 implementing one or more functions of the above-described embodiment is supplied to a system or a device via a network or a storage medium and one or more processors in a computer of the system or the device read and execute the program 128. Further, the present invention can be achieved also by a circuit implementing one or more functions (for example, ASIC).

The program 128 and a computer-readable storage medium in which the program 128 is stored are included in the present invention.

It should be noted that the above-described embodiments of the present invention merely illustrate concrete examples of implementing the present invention, and the technical scope of the present invention is not to be construed in a restrictive manner by these embodiments. That is, the present invention may be implemented in various forms without departing from the technical spirit or main features thereof.

**Claims**

1. A maintenance management device that manages maintenance in a facility group consisting of a plurality of facilities, the maintenance management device comprising:

    a condition information acquisition means that acquires, for each facility in the plurality of facilities, a plurality of pieces of condition information that indicate a condition of the corresponding facility;
    a current failure risk calculation means that calculates, for each of the facilities, a current facility failure risk by using the plurality of pieces of condition information in the corresponding facility;
    a future failure risk estimation means that estimates, for each of the facilities, a future facility failure risk by using the current facility failure risk in the corresponding facility;
    a maintenance merit calculation means that calculates, for each of the facilities, a maintenance merit based on a reduction amount of a facility stop prediction time based on the future facility failure risk in the corresponding facility and a maintenance prediction time based on the future facility failure risk in the corresponding facility; and an optimal maintenance timing setting means that sets an optimal maintenance timing relating to the maintenance for the facility group based on the maintenance merits in the respective facilities.

**2.** The maintenance management device according to claim 1, wherein the maintenance merit calculation means further calculates a comprehensive maintenance merit relating to the facility group by using the maintenance merits in the respective facilities, and the optimal maintenance timing setting means sets a timing at which the comprehensive maintenance merit is maximum as the optimal maintenance timing.

**3.** The maintenance management device according to claim 1, wherein the maintenance merit calculation means further calculates a comprehensive maintenance merit relating to the facility group by using the maintenance merits in the respective facilities, and the optimal maintenance timing setting means sets, in the case where a timing at which the comprehensive maintenance merit is maximum is after a planned repair timing of the facility group, the planned repair timing as the optimal maintenance timing.

**4.** The maintenance management device according to claim 2 or 3, wherein, the maintenance merit calculation means excludes, out of the maintenance merits in the respective facilities, the maintenance merit that is negative in all the future sections from a current time from a target used when calculating the comprehensive maintenance merit.

**5.** The maintenance management device according to any one of claims 1 to 4, further comprising: a display control means that performs control to display information of the optimal maintenance timing on a display device.

**6.** The maintenance management device according to any one of claims 1 to 5, wherein the current failure risk calculation means calculates a current failure risk for each condition information of the plurality of pieces of condition information, and calculates, out of a plurality of the calculated current failure risks, the maximum current failure risk as the current facility failure risk.

**7.** The maintenance management device according to claim 6, wherein the current failure risk calculation means, when calculating the current failure risk for each of pieces of the condition information, performs weighting on each of pieces of the condition information.

**8.** The maintenance management device according to any one of claims 1 to 7, further comprising:

a storage means that stores information of a facility failure risk estimation table that illustrates, for each of the facilities, a relationship between an elapsed time and an assumed facility failure risk, wherein, the future failure risk estimation means estimates, for each of the facilities, the future facility failure risk by using the current facility failure risk in the corresponding facility and the facility failure risk estimation table.

**9.** The maintenance management device according to claim 8, wherein the future failure risk estimation means refers to the facility failure risk estimation table to find an elapsed time corresponding to the current facility failure risk as a current time, and estimates the assumed facility failure risk due to each elapsed time from the current time in the facility failure risk estimation table as the future facility failure risk.

**10.** The maintenance management device according to any one of claims 1 to 9, further comprising:

a stop prediction time reduction amount calculation means that calculates, for each of the facilities, the reduction amount of the facility stop prediction time by using the future facility failure risk in the corresponding facility; and a maintenance prediction time calculation means that calculates, for each of the facilities, the maintenance prediction time by using the future facility failure risk in the corresponding facility, wherein the maintenance merit calculation means calculates, for each of the facilities, the maintenance merit based on a reduction amount of a facility stop prediction time calculated by the stop prediction time reduction amount calculation means and a maintenance prediction time calculated by the maintenance prediction time calculation means.

11. The maintenance management device according to claim 10, further comprising:

a storage means that stores information of a facility stop time table illustrating, for each of the facilities, a facility stop time in the event of failure and information of a risk reduction coefficient table illustrating, for each of the facilities, a relationship between a future facility failure risk and a risk reduction coefficient in the corresponding facility, wherein

the stop prediction time reduction amount calculation means refers to, for each of the facilities, the risk reduction coefficient table to find the risk reduction coefficient corresponding to a future facility failure risk estimated by the future failure risk estimation means, and calculates the reduction amount of the facility stop prediction time by using the found risk reduction coefficient and the facility stop time in the event of failure and the future facility failure risk in the corresponding facility.

12. The maintenance management device according to claim 10, further comprising:

a storage means that stores information of a maintenance base time table illustrating, for each of the facilities, a maintenance base time being a standard time taken for maintenance and information of a maintenance time coefficient table illustrating, for each of the facilities, a relationship between a future facility failure risk and a maintenance time coefficient in the corresponding facility, wherein

the maintenance prediction time calculation means refers to, for each of the facilities, the maintenance time coefficient table to find the maintenance time coefficient corresponding to a future facility failure risk estimated by the future failure risk estimation means, and calculates the maintenance prediction time by using the found maintenance time coefficient and the maintenance base time in the corresponding facility.

13. A maintenance management method that manages maintenance in a facility group consisting of a plurality of facilities, the maintenance management method comprising:

a condition information acquisition step that acquires, for each facility in the plurality of facilities, a plurality of pieces of condition information that indicate a condition of the corresponding facility;

a current failure risk calculation step that calculates, for each of the facilities, a current facility failure risk by using the plurality of pieces of condition information in the corresponding facility;

a future failure risk estimation step that estimates, for each of the facilities, a future facility failure risk by using the current facility failure risk in the corresponding facility;

a maintenance merit calculation step that calculates, for each of the facilities, a maintenance merit based on a reduction amount of a facility stop prediction time based on the future facility failure risk in the corresponding facility and a maintenance prediction time based on the future facility failure risk in the corresponding facility; and

an optimal maintenance timing setting step that sets an optimal maintenance timing relating to the maintenance for the facility group based on the maintenance merits in the respective facilities.

14. A program causing a computer to function as respective means of the maintenance management device according to any one of claims 1 to 12.

# FIG. 1

100 MAINTENANCE MANAGEMENT DEVICE

10

130 PROCESSING UNIT

110 INPUT UNIT

120 STORAGE UNIT

121 CONDITION INFORMATION DIAGNOSIS TABLE
125 RISK REDUCTION COEFFICIENT TABLE
122 CURRENT FAILURE RISK EVALUATION TABLE
126 MAINTENANCE BASE TIME TABLE
123 FACILITY FAILURE RISK ESTIMATION TABLE
127 MAINTENANCE TIME COEFFICIENT TABLE
124 FACILITY STOP TIME TABLE
128 PROGRAM

131 CONDITION INFORMATION ACQUISITION UNIT
132 CURRENT FAILURE RISK CALCULATION UNIT
133 FUTURE FAILURE RISK ESTIMATION UNIT
135 MAINTENANCE PREDICTION TIME CALCULATION UNIT
134 STOP PREDICTION TIME REDUCTION AMOUNT CALCULATION UNIT
138 DISPLAY CONTROL UNIT
137 OPTIMAL MAINTENANCE TIMING SETTING UNIT
136 MAINTENANCE MERIT CALCULATION UNIT

400 CONTROL DEVICE

600

500

S 700

200

FACILITY A ~201-A    FACILITY B ~201-B    FACILITY C ~201-C ...

300-A VIBROMETER 301-A / THERMOMETER 302-A / IMAGING DEVICE 303-A

300-B VIBROMETER 301-B / THERMOMETER 302-B / IMAGING DEVICE 303-B

300-C VIBROMETER 301-C / THERMOMETER 302-C / IMAGING DEVICE 303-C

EP 3 836 042 A1

# FIG. 2

START

ACQUIRE CONDITION INFORMATION DIAGNOSIS TABLE ~S101

ACQUIRE PLURALITY OF PIECES OF CONDITION INFORMATION
FOR EACH FACILITY BASED
ON CONDITION INFORMATION DIAGNOSIS TABLE ~S102

CALCULATE CURRENT FACILITY FAILURE RISK
FOR EACH FACILITY BY USING PLURALITY OF PIECES OF
CONDITION INFORMATION IN CORRESPONDING FACILITY ~S103

ESTIMATE FUTURE FACILITY FAILURE RISK
FOR EACH FACILITY BY USING CURRENT FACILITY
FAILURE RISK IN CORRESPONDING FACILITY ~S104

CALCULATE REDUCTION AMOUNT OF FACILITY STOP
PREDICTION TIME FOR EACH FACILITY BY USING FUTURE
FACILITY FAILURE RISK IN CORRESPONDING FACILITY ~S105

CALCULATE MAINTENANCE PREDICTION TIME
FOR EACH FACILITY BY USING FUTURE FACILITY
FAILURE RISK IN CORRESPONDING FACILITY ~S106

CALCULATE MAINTENANCE MERIT FOR EACH FACILITY
BASED ON REDUCTION AMOUNT OF FACILITY STOP
PREDICTION TIME AND MAINTENANCE
PREDICTION TIME IN CORRESPONDING FACILITY ~S107

SET OPTIMAL MAINTENANCE TIMING OF FACILITY GROUP
BASED ON MAINTENANCE MERITS IN RESPECTIVE FACILITIES ~S108

DISPLAY INFORMATION OF OPTIMAL
MAINTENANCE TIMING ON DISPLAY DEVICE ~S109

FINISH

# FIG. 3A

VIBRATION DIAGNOSIS TABLE (121-1)

| METHOD | AMPLITUDE | FFT | CHAOS | ······ | MONITORING CYCLE |
|---|---|---|---|---|---|
| SAMPLING FREQUENCY | 5kHz | 40kHz | 10kHz | | |
| FACILITY A | ○ | | | | ONE HOUR |
| FACILITY B | | ○ | ○ | | CONSTANT |
| FACILITY C | | | ○ | | 10 MINUTES |
| ⋮ | | | | | |
| ⋮ | | | | | |
| ⋮ | | | | | |

# FIG. 3B

TEMPERATURE DIAGNOSIS TABLE (121-2)

| METHOD | INSTANTANEOUS VALUE | AMPLITUDE | RATE OF CHANGE | ······ | MONITORING CYCLE |
|---|---|---|---|---|---|
| SAMPLING PERIOD | ONE SECOND AVERAGE | ONE MINUTE | ONE HOUR | | |
| FACILITY A | ○ | | | | ONE HOUR |
| FACILITY B | | ○ | ○ | | CONSTANT |
| FACILITY C | | | ○ | | 10 MINUTES |
| ⋮ | | | | | |
| ⋮ | | | | | |
| ⋮ | | | | | |

# FIG. 3C

IMAGE DIAGNOSIS TABLE (121-3)

| METHOD | DIRT | CORROSION | DISTORTION | ...... | MONITORING CYCLE |
|--------|------|-----------|------------|--------|------------------|
| FACILITY A | O | | | | ONE HOUR |
| FACILITY B | | O | O | | ONE WEEK |
| FACILITY C | | | O | | ONE DAY |
| ⋮ | | | | | |
| ⋮ | | | | | |
| ⋮ | | | | | |

# FIG. 3D

CONTROL DIAGNOSIS TABLE (121-4)

| METHOD | COMMAND RESPONSE | CONVERGENCE TIME | RATE OF CHANGE | ...... | MONITORING CYCLE |
|--------|------------------|------------------|----------------|--------|------------------|
| SAMPLING CYCLE | 10ms | 100ms | 1ms | | |
| FACILITY A | O | | | | EVERY CONTROL |
| FACILITY B | | O | O | | ONE DAY |
| FACILITY C | | | O | | ONE WEEK |
| ⋮ | | | | | |
| ⋮ | | | | | |
| ⋮ | | | | | |

## FIG. 3E

COMBINED DIAGNOSIS TABLE (121-5)

| METHOD | VIBRATION | TEMPERATURE | IMAGE | CONTROL | ・・・・・・ |
|---|---|---|---|---|---|
| FACILITY A | ○ | ○ | ○ | | |
| FACILITY B | | ○ | | ○ | |
| FACILITY C | | | ○ | ○ | |
| ⋮ | | | | | |
| ⋮ | | | | | |
| ⋮ | | | | | |

FIG. 4A

EP 3 836 042 A1

CURRENT FAILURE RISK EVALUATION TABLE FOR VIBRATION (122-1)

FACILITY C (AMPLITUDE : CHAOS → FAILURE RISK)

· · · · · · · · · · · · · · · · · · · · · · · · · · · · · · · · · · · · · · · · · · · · · ·

FACILITY B (AMPLITUDE : CHAOS → FAILURE RISK)

· · · · · · · · · · · · · · · · · · · · · · · · · · · · · · · · · · · · · · · · · · · · · ·

FACILITY B (AMPLITUDE : FFT → FAILURE RISK)

· · · · · · · · · · · · · · · · · · · · · · · · · · · · · · · · · · · · · · · · · · · · · ·

FACILITY A (AMPLITUDE : AMPLITUDE → FAILURE RISK)

| AMPLITUDE LEVEL | Vr1 | Vr2 | Vr3 | · · · · · · | Vrn |
|---|---|---|---|---|---|
| CURRENT FAILURE RISK | Rvr1 | Rvr2 | Rvr3 | | Rvrn |

## FIG. 4B

CURRENT FAILURE RISK EVALUATION TABLE FOR TEMPERATURE (122-2)

FACILITY C (TEMPERATURE : RATE OF CHANGE → FAILURE RISK)

FACILITY B (TEMPERATURE : RATE OF CHANGE → FAILURE RISK)

FACILITY B (TEMPERATURE : AMPLITUDE → FAILURE RISK)

FACILITY A (TEMPERATURE : INSTANTANEOUS VALUE → FAILURE RISK)

| TEMPERATURE LEVEL | Ta1 | Ta2 | Ta3 | ...... | Tan |
|---|---|---|---|---|---|
| CURRENT FAILURE RISK | Rta1 | Rta2 | Rta3 | | Rtan |

EP 3 836 042 A1

## FIG. 4C

CURRENT FAILURE RISK EVALUATION TABLE FOR IMAGE (122-3)

FACILITY C (IMAGE : DISTORTION→FAILURE RISK)

· · · · · · · · · · · · · · · · · · · · · · · · · · · · · · · · · · · ·

FACILITY B (IMAGE : DISTORTION→FAILURE RISK)

· · · · · · · · · · · · · · · · · · · · · · · · · · · · · · · · · · · ·

FACILITY B (IMAGE : CORROSION→FAILURE RISK)

· · · · · · · · · · · · · · · · · · · · · · · · · · · · · · · · · · · ·

FACILITY A (IMAGE : DIRT→FAILURE RISK)

| DIRT LEVEL | Id1 | Id2 | Id3 | · · · · · · | Idn |
|---|---|---|---|---|---|
| CURRENT FAILURE LEVEL | Rid1 | Rid2 | Rid3 | | Ridn |

EP 3 836 042 A1

## FIG. 4D

CURRENT FAILURE RISK EVALUATION TABLE FOR CONTROL (122-4)

FACILITY C (CONTROL : RATE OF CHANGE→FAILURE RISK)

FACILITY B (CONTROL : RATE OF CHANGE→FAILURE RISK)

FACILITY B (CONTROL : CONVERGENCE TIME→FAILURE RISK)

FACILITY A (CONTROL : COMMAND RESPONSE→FAILURE RISK)

| COMMAND RESPONSE LEVEL | Cr1 | Cr2 | Cr3 | $\cdots\cdots$ | Crn |
|---|---|---|---|---|---|
| CURRENT FAILURE RISK | Rcr1 | Rcr2 | Rcr3 | | Rcrn |

EP 3 836 042 A1

# FIG. 4E

CURRENT FAILURE RISK EVALUATION TABLE RELATING TO WEIGHTING (122-5)

| FACILITY NAME | K1 | K2 | K3 | K4 | ・・・・・・ |
|---|---|---|---|---|---|
| FACILITY A | 0.3 | 0.4 | 0.2 | 0.1 | 0 |
| FACILITY B | 0.1 | 0.2 | 0.5 | 0.1 | 0.1 |
| FACILITY C | 0.3 | 0.4 | 0 | 0.3 | 0 |
| ⋮ | | | | | |
| ⋮ | | | | | |
| ⋮ | | | | | |

401

FIG. 5

EP 3 836 042 A1

## FIG. 6A

FACILITY STOP TIME TABLE (124)

| FACILITY NAME | FACILITY STOP TIME IN THE EVENT OF FAILURE |
|---|---|
| FACILITY A | $L_A$ |
| FACILITY B | $L_B$ |
| FACILITY C | $L_C$ |
| ⋮ | ⋮ |

## FIG. 6B

RISK REDUCTION COEFFICIENT TABLE (125)

FACILITY C ···································

FACILITY B ·······························

| FACILITY A | FACILITY FAILURE RISK (FUTURE FACILITY FAILURE RISK) | $R_{A1}$ | $R_{A2}$ | $R_{A3}$ | ··· | 1.0 |
|---|---|---|---|---|---|---|
| | RISK REDUCTION COEFFICIENT | $\eta_{A1}$ | $\eta_{A2}$ | $\eta_{A3}$ | ··· | $\eta_{AX}$ |

125−A

125−C

125−B

# FIG. 6C

RISK REDUCTION COEFFICIENT TABLE (125)

# FIG. 7A

FACILITY BASE TIME TABLE (126)

| FACILITY NAME | MAINTENANCE BASE TIME |
|---|---|
| FACILITY A | $M_A$ |
| FACILITY B | $M_B$ |
| FACILITY C | $M_C$ |
| ⋮ | ⋮ |

## FIG. 7B

MAINTENANCE TIME COEFFICIENT TABLE (127)

| | | $R_{A1}$ | $R_{A2}$ | $R_{A3}$ | $\cdots$ | 1.0 |
|---|---|---|---|---|---|---|
FACILITY C
FACILITY B

FACILITY A

| FACILITY FAILURE RISK (FUTURE FACILITY FAILURE RISK) | $R_{A1}$ | $R_{A2}$ | $R_{A3}$ | $\cdots$ | 1.0 |
|---|---|---|---|---|---|
| MAINTENANCE TIME COEFFICIENT | $\delta_{A1}$ | $\delta_{A2}$ | $\delta_{A3}$ | $\cdots$ | 1.0 |

127-A

127-C

127-B

## FIG. 7C

MAINTENANCE TIME COEFFICIENT TABLE (127)

MAINTENANCE TIME COEFFICIENT($\delta$)

127

RISK (R)

## FIG. 8A

VIBRATION DIAGNOSIS TABLE (121-6)

| METHOD | AMPLITUDE | FFT | CHAOS | MONITORING CYCLE |
|---|---|---|---|---|
| SAMPLING FREQUENCY | 5kHz | 40kHz | 10kHz | |
| FACILITY K | | O | | EIGHT HOURS |
| FACILITY N | O | | | ONE HOUR |

## FIG. 8B

TEMPERATURE DIAGNOSIS TABLE (121-7)

| METHOD | INSTANTANEOUS VALUE | AMPLITUDE | RATE OF CHANGE | MONITORING CYCLE |
|---|---|---|---|---|
| SAMPLING PERIOD | ONE SECOND AVERAGE | ONE MINUTE | ONE HOUR | |
| FACILITY K | O | | | ONE HOUR |
| FACILITY N | | O | O | CONSTANT |

## FIG. 8C

COMBINED DIAGNOSIS TABLE (121-8)

| METHOD | VIBRATION | TEMPERATURE | CONTROL | IMAGE |
|---|---|---|---|---|
| FACILITY K | O | O | | |
| FACILITY N | | O | | |

## FIG. 9A

CURRENT FAILURE RISK EVALUATION TABLE OF FACILITY K

122-6K : FACILITY K (VIBRATION : FFT → FAILURE RISK)

| VIBRATION LEVEL(mm) | ≧1 | 2 | 3 | 5 | 7 | 10 | 15 | 20≦ |
|---|---|---|---|---|---|---|---|---|
| RISK | 0 | 0.005 | 0.1 | 0.2 | 0.3 | 0.5 | 0.7 | 1.0 |

122-7K : FACILITY K (TEMPERATURE : INSTANTANEOUS VALUE → FAILURE RISK)

| TEMPERATURE LEVEL (℃) | ≧30 | 31 | 33 | 35 | 40 | 50 | 60 | 80≦ |
|---|---|---|---|---|---|---|---|---|
| RISK | 0 | 0.01 | 0.03 | 0.1 | 0.2 | 0.4 | 0.3 | 1.0 |

EP 3 836 042 A1

## FIG. 9B

CURRENT FAILURE RISK EVALUATION TABLE OF FACILITY N

122-6N : FACILITY N (VIBRATION : AMPLITUDE → FAILURE RISK)

| VIBRATION LEVEL(mm) | ≧1 | 2 | 3 | 5 | 7 | 10 | 15 | 20≦ |
|---|---|---|---|---|---|---|---|---|
| RISK | 0 | 0.1 | 0.2 | 0.7 | 0.8 | 0.8 | 0.9 | 1.0 |

122-7N1 : FACILITY N (TEMPERATURE : AMPLITUDE → FAILURE RISK)

| TEMPERATURE LEVEL (℃/MINUTE) | ≧0.5 | 1 | 1.5 | 2 | 2.5 | 3 | 5 | 7≦ |
|---|---|---|---|---|---|---|---|---|
| RISK | 0 | 0.15 | 0.21 | 0.28 | 0.35 | 0.4 | 0.7 | 1.0 |

122-7N2 : FACILITY N (TEMPERATURE : RATE OF CHANGE → FAILURE RISK)

| TEMPERATURE LEVEL (℃/MINUTE) | ≧0.1 | 0.2 | 0.3 | 0.4 | 0.5 | 0.6 | 1 | 1.4≦ |
|---|---|---|---|---|---|---|---|---|
| RISK | 0 | 0.1 | 0.2 | 0.7 | 0.8 | 0.8 | 0.9 | 1.0 |

EP 3 836 042 A1

FIG. 9C

EP 3 836 042 A1

CURRENT FAILURE RISK EVALUATION TABLE RELATING TO WEIGHTING (122-8)

| FACILITY NAME | VIBRATION : K1 | TEMPERATURE : K2 | IMAGE : K3 | CONTROL : K4 | TOTAL OF OTHERS |
|---|---|---|---|---|---|
| FACILITY K | 0.7 | 0.3 | 0 | 0 | 0 |
| FACILITY N | 0.5 | 0.5 | 0 | 0 | 0 |

# FIG. 9D

EP 3 836 042 A1

CURRENT FAILURE RISK EVALUATION RESULT OF FACILITY K

| | MEASURED VALUE | RISK VALUE |
|---|---|---|
| ·VIBRATION : FFT | 4mm | 0.15 |
| ·TEMPERATURE : INSTANTANEOUS VALUE | 32°C | 0.02 |

WEIGHTING ⟹ CURRENT FACILITY FAILURE RISK : 0.105

# FIG. 9E

CURRENT FAILURE RISK EVALUATION RESULT OF FACILITY N

|  | MEASURED VALUE | RISK VALUE |
|---|---|---|
| ·VIBRATION : AMPLITUDE | 6mm | 0.75 |
| ·TEMPERATURE : AMPLITUDE | 2°C | 0.28 |
| ·TEMPERATURE : RATE OF CHANGE | 0.1°C | 0 |

} 0.28

WEIGHTING ⟹ CURRENT FACILITY FAILURE RISK : <u>0.375</u>

OUT OF RISK VALUES OF TEMPERATURE, MAXIMUM VALUE IS EMPLOYED

EP 3 836 042 A1

## FIG. 10A

## FIG. 10B

## FIG. 10C

MAINTENANCE TIME COEFFICIENT ($\delta$)

| 2.5 | 2.0 | 1.5 | 1.0 | 0.5 | 0.0 |

RISK (R)

0.00 | 0.05 | 0.18 | 0.38 | 0.65 | 1.00
0.02 | 0.11 | 0.27 | 0.51 | 0.82

## FIG. 10D

MAINTENANCE MERIT

3.57 DAYS

CURRENT TIME
(2.93 DAYS)

MAXIMUM MERIT
(6.50 DAYS)

ELAPSED TIME (DAY)

OPTIMAL MAINTENANCE TIMING IS AFTER 3.57 DAYS

## FIG. 11A

## FIG. 11B

## FIG. 11C

MAINTENANCE TIME COEFFICIENT ($\delta$) vs RISK (R)

## FIG. 11D

OPTIMAL MAINTENANCE TIMING IS AFTER 0.75 DAYS

## FIG. 12

OPTIMAL MAINTENANCE TIMING IS AFTER 3.0 DAYS
(FACILITY GROUP)

## FIG. 13A

## FIG. 13B

# FIG. 13C

# FIG. 13D

NO MAINTENANCE IS PERFORMED BECAUSE MAINTENANCE MERIT IS NEGATIVE

## FIG. 14A

## FIG. 14B

## FIG. 14C

MAINTENANCE TIME COEFFICIENT (δ) — y-axis: 4.0, 3.0, 2.0, 1.0, 0.0
RISK (R) — x-axis: 0.00, 0.02, 0.05, 0.11, 0.18, 0.27, 0.38, 0.51, 0.65, 0.82, 1.00

## FIG. 14D

PLANNED REPAIR DATE

MAXIMUM VALUE
(9.5 DAYS)

CURRENT TIME
(6.0 DAYS)

MAINTENANCE MERIT — y-axis: 2.0, 1.0, 0.0, −1.0, −2.0, −3.0, −4.0
ELAPSED TIME (DAY) — x-axis: 0, 1, 2, 3, 4, 5, 6, 7, 8, 9

DAY OF MAXIMUM MAINTENANCE MERIT IS AFTER PLANNED REPAIR

⇒ MAINTENANCE IS PERFORMED ON PLANNED REPAIR DATE

## INTERNATIONAL SEARCH REPORT

| International application No. |
| --- |
| PCT/JP2019/030000 |

A. CLASSIFICATION OF SUBJECT MATTER
Int.Cl. G06Q10/00(2012.01)i

According to International Patent Classification (IPC) or to both national classification and IPC

B. FIELDS SEARCHED

Minimum documentation searched (classification system followed by classification symbols)
Int.Cl. G06Q10/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2010-191494 A (MITSUBISHI HEAVY INDUSTRIES, LTD.) 02 September 2010, entire text, all drawings (Family: none) | 1-14 |
| A | JP 2009-3517 A (HITACHI, LTD.) 08 January 2009, entire text, all drawings & WO 2008/155982 A1 & CN 101681166 A | 1-14 |
| A | JP 2005-182465 A (TOSHIBA CORP.) 07 July 2005, entire text, all drawings & US 2005/0149570 A1 & EP 1544771 A1 & CN 1629867 A | 1-14 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>　25 October 2019 (25.10.2019) | Date of mailing of the international search report<br>　05 November 2019 (05.11.2019) |
| --- | --- |
| Name and mailing address of the ISA/<br>　Japan Patent Office<br>　3-4-3, Kasumigaseki, Chiyoda-ku,<br>　Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2019/030000 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2017/106919 A1 (SUEZ WATER & TREATMENT SOLUTIONS PTY LTD.) 29 June 2017, entire text, all drawings & CA 3001886 A1 & CN 108496196 A | 1-14 |

Form PCT/ISA/210 (continuation of second sheet) (January 2015)

**REFERENCES CITED IN THE DESCRIPTION**

**Patent documents cited in the description**

- JP 2005182465 A
- JP 2009180722 A